# EUROPÄISCHE PATENTSCHRIFT

(11) **EP 1 550 820 B1**
(45) Veröffentlichungstag und Bekanntmachung des Hinweises auf die Patenterteilung: **31.10.2007**
(21) Anmeldenummer: 05005212.5
(22) Anmeldetag: 21.12.2001
(51) Int. Cl.: F16H 61/04, F16H 59/72, F16D 48/06, B60W 10/10, B60W 10/02

(54) **Kraftfahrzeug mit einem eine Mehrfach-Kupplungseinrichtung aufweisenden Antriebsstrang**
Vehicle with a drivetrain having a multiple clutch device
Véhicule avec une chaîne de traction ayant un dispositif à embrayages multiples

(30) Priorität: 12.01.2001 DE 10101176; 01.10.2001 DE 10148424
(43) Veröffentlichungstag der Anmeldung: 06.07.2005
(62) Teilanmeldung aus: 01985921.4
(73) Patentinhaber: ZF Sachs AG, 97424 Schweinfurt (DE); Volkswagen AG, 38436 Wolfsburg (DE)
(72) Erfinder: Kuhstrebe, Jochen, 97318 Westheim (DE); Moseler, Olaf, 97070 Würzburg (DE); Rohm, Axel, 97453 Schonungen (DE); Steiner, Eduard, 97070 Würzburg (DE); Reuthal, Rainer, 97294 Unterpleichfeld (DE); Schneider, Hans-Jürgen, 97440 Werneck-Stettbach (DE); Kundermann, Wolfgang, 97422 Schweinfurt (DE); Sudau, Jörg, 97464 Niederwerrn (DE); John, Thomas, 97529 Alitzheim (DE); Strasser, Thomas, 97422 Schweinfurt (DE)

(56) Entgegenhaltungen:
- DE-A- 4 136 583
- JP-A- 1 169 125
- JP-A- 2 209 627
- US-A- 3 760 918
- US-A- 4 321 990
- US-A- 5 181 431
- US-A- 5 234 087
- PATENT ABSTRACTS OF JAPAN Bd. 013, Nr. 455 (M-879), 13. Oktober 1989 (1989-10-13) -& JP 01 176815 A (HINO MOTORS LTD), 13. Juli 1989 (1989-07-13)

## Beschreibung

### [Technisches Gebiet]

Die Erfindung betrifft nach mehreren Hauptaspekten allgemein eine sogenannte Mehrfach-Kupplungseinrichtung, ggf. Doppel-Kupplungseinrichtung, für die Anordnung in einem Kraftfahrzeug-Antriebsstrang zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung zur Momentübertragung zwischen der Antriebseinheit und dem Getriebe aufweist, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit (insbesondere für einen nasslaufenden Betrieb) zuführbar ist. Es wird in diesem Zusammenhang insbesondere (aber nicht ausschließlich) an eine solche Kupplungseinrichtung gedacht, bei der die Lamellen-Kupplungsanordnungen auf hydraulischem Wege vermittels in die Kupplungseinrichtung integrierten hydraulischen Nehmerzylindern betätigbar sind.

### [Stand der Technik]

Eine derartige Kupplungseinrichtung wurde zum Beispiel in der US 5 181 431 A vorgeschlagen, die ein Kraftfahrzeug gemäß dem Oberbegriff der Ansprüche 1, 3, 11, 14 , 18, 22 und 25 offenbart.

Die Erfindung betrifft nach diesem Hauptaspekt ferner einen Antriebsstrang, der eine Antriebseinheit und ein Getriebe (ggf. Lastschaltgetriebe) mit einer ersten Getriebeeingangswelle und einer zweiten Getriebeeingangswelle sowie eine Kupplungseinrichtung der genannten Art aufweist, sowie ein einen derartigen Antriebsstrang umfassendes Kraftfahrzeug. Es wird in diesem Zusammenhang insbesondere daran gedacht, dass dem vorzugsweise als Lastschaltgetriebe ausgeführten Getriebe eine Aktuator-Anordnung und eine die Aktuator-Anordnung ansteuernde Steuereinrichtung zugeordnet ist, unter deren Vermittelung der ersten und der zweiten Getriebeeingangswelle zugeordnete Getriebegänge ein- und auslegbar sind.

Um einen Verschleiß bzw. ein Verbrennen der Lamellen (insbesondere Belaglamellen) zu verhindern, ist die Schmierung/Kühlung der Lamellen durch eine Betriebsflüssigkeit (insbesondere Kühlöl) erforderlich. Regelmäßig für derartige Anwendungen eingesetzte Öle weisen bei Betriebstemperatur (ca. 90°C) eine niedrige Zähigkeit (niedrige Viskosität) auf, so dass bei geöffneten Kupplungsanordnungen (druckloser hydraulischer Betätigungszylinder im Falle einer hydraulisch betätigbaren Kupplungsanordnung des NORMALERWEISE-OFFEN-Typs) die Schleppmomente, die durch das zwischen den Lamellen befindliche Öl hervorgerufen werden, vergleichsweise gering sind (beispielsweise kleiner als 2 Nm). Ist jedoch die Öltemperatur sehr niedrig (etwa deutlich kleiner als 0°C), wie dies beispielsweise infolge eines nächtlichen Abstellens des Kraftfahrzeugs im Winter auftreten kann, resultiert eine drastisch erhöhte Zähigkeit (Viskosität) des Öls, und es können dann sehr hohe Schleppmomente auftreten (bis zu Werten größer als 25 Nm). Zusätzlich zu den Schleppmomenten können Losbrech- oder Loslösmomente von bis zu über 50 Nm aufgrund von aneinander anhaftenden (aneinander klebenden) Lamellen auftreten, die zu Beginn des Fahrbetriebs aber nur einmal aufzubringen wären, um die aneinander anhaftenden (aneinander klebenden) Lamellen voneinander zu lösen. Nach diesem Lösen der Lamellen treten dann aber immer noch die Schleppmomente auf, bis die Zähigkeit (Viskosität) des Öls durch die Erwärmung des Motors und das Einbringen von Wärme (Reibenergie) in die Kupplungsanordnungen sinkt.

Als Folge dieser hohen Schlepp- bzw. Aneinanderhaftmomente kann das Einlegen eines Ganges praktisch unmöglich werden, da die Synchronisierungseinrichtungen des Getriebes in der Regel nicht für die Überwindung derartig hoher Momente ausgelegt sind. Typisch sind die Synchronisierungseinrichtungen für Momente in der Größenordnung 5 Nm ausgelegt. Können keine Gänge eingelegt bzw. kann nicht geschaltet werden, so ist ein Fahrbetrieb mit dem Fahrzeug nicht möglich.

### [Darstellung der Erfindung]

Auch die vorliegende Erfindung zielt darauf, die vorstehend angesprochenen Probleme zu lösen oder zumindest zu mildern, insbesondere besser beherrschbar zu machen. Dieses Ziel wird durch ein Fahrzeug mit den Merkmalen eines der Ansprüche 1, 3, 11, 14, 18, 22 oder 25 erreicht.

Im normalen Fahrbetrieb ohne starke Beschleunigung oder ohne Anfahren mit großer Last (z.B. Anfahren mit einem Hänger) erwärmt sich die Betriebsflüssigkeit (das Kühlöl) in der Regel nur relativ langsam. Dies bedeutet, dass sich auch die in den Kupplungsanordnungen auftretenden Schleppmomente nur vergleichsweise langsam verringern. Es ist deshalb vorstellbar, dass die Schleppmomente erst nach zwei bis drei Minuten Fahrt Werte erreichen, die ein normales Synchronisieren ohne Überlastung oder Schädigung der Synchroneinrichtungen zulassen. Vorteilhaft zur Reduzierung der Aufwärmperiode ist auf jeden Fall, die Menge an Betriebsflüssigkeit (Kühlölmenge) so klein wie unbedingt erforderlich zu halten. Zu bedenken ist ferner, dass das auftretende Schleppmoment stark von der momentan zugeführten Betriebsflüssigkeitsmenge (Kühlölmenge) ansteigt. Dies spricht dafür, nur geringe Betriebsflüssigkeitsmengen zuzuführen. Andererseits muss für die erforderliche Kühlung gesorgt werden. Man wird einen Kompromiss zwischen notwendiger Kühlung und möglichst kleinen Schleppmomenten suchen und finden.

Eine Möglichkeit zur Verkürzung der Aufheizdauer besteht in der gezielten Erwärmung durch Einbringen von Verlustleistung in die Kupplungseinrichtung, z.B. durch gleichzeitiges Betätigen beider Kupplungsanordnungen, so dass ein Teil der Leistung der Antriebseinheit (Motorleistung) in der Kupplungseinrichtung in Wärme umgesetzt wird.

Eine weitere Möglichkeit zur Reduzierung des Schleppmoments besteht darin, dass die Zufuhr von Betriebsflüssigkeit dann reduziert oder ganz abgestellt wird, wenn keine Kühlung bzw. Schmierung der Lamellen benötigt wird. Hieraus resultiert unmittelbar eine Reduktion der Schleppmomente, da diese durch zwischen den Lamellen befindliche Betriebsflüssigkeit (Kühlöl) verursacht werden. Es wird nach einem ersten Hauptaspekt der Erfindung für ein Kraftfahrzeug umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, speziell vorgeschlagen, dass die Pumpenanordnung oder eine Flusseinstelleinrichtung durch eine Steuereinrichtung ansteuerbar ist, um einen momentanen Betriebsflüssigkeitsfluss zu den Lamellen-Kupplungsanordnungen einzustellen, und dass die Steuereinrichtung dafür ausgelegt ist, in Abhängigkeit von einem momentanen Zufuhrbedarf an Betriebsmedium zu wenigstens einer der Kupplungsanordnungen den Betriebsflüssigkeitsfluss zu vergrößern und zu verkleinern, derart, dass die Steuereinrichtung bei geringerem Zufuhrbedarf den Betriebsflüssigkeitsfluss verkleinert oder unterbricht und bei größerem Zufuhrbedarf den Betriebsflüssigkeitsfluss vergrößert, wobei die elektronische Steuereinheit auf Grundlage eines Temperatursignals, welches von einem die Temperatur des Kühlöls erfassenden Sensors stammt, das auf die Zeiteinheit bezogene Fördervolumen der Pumpenanordnung oder / und einen druckgelassen Volumenstrom eines im Kreislauf angeordneten Volumenstrom-Einstellventils steuert oder regelt.

Bei laufender Antriebseinheit wird durch die Fliehkraft die Betriebsflüssigkeit aus den Lamellen der nicht betätigten Kupplungsanordnung geschleudert. Hieraus resultiert eine signifikante Reduktion des Schleppmoments. Es ist vorstellbar, dass durch diese Maßnahme die Schleppmomente soweit reduziert werden, dass sogar das Einlegen von Gängen auf der betreffenden Getriebeeingangswelle möglich ist. So könnte man daran denken, nach einem Anfahren, z.B. im 2. Gang, die zum Anfahren nicht verwendete Kupplungsanordnung, die dem noch eingelegten Rückwärtsgang zugeordnet ist, schnell freizuschleudern und damit für ein Schalten zum nächsten Vorwärtsgang vorzubereiten. Dieses Schalten kann dann in der Regel normal und ohne übermäßige Belastung der Synchroneinrichtungen des Getriebes erfolgen und es ist dann nicht erforderlich, dem Fahrer aus Sicherheitsgründen eine Geschwindigkeitsbegrenzung (wegen des noch eingelegten Rückwärtsgangs) zuzumuten.

Weiterbildend wird vorgeschlagen, dass die Steuereinrichtung den Zuführbedarf im Hinblick auf eine an der Kupplungsanordnung auftretende Verlustleistung oder/und auf einen Schmierbedarf an den Lamellen der Kupplungsanordnung bestimmt. Hierdurch wird stets für ausreichende Kühlung bzw. Schmierung gesorgt.

Nach einem zweiten Hauptaspekt der Erfindung wird für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass die Pumpenanordnung oder die Flusseinstelleinrichtung oder/und eine einer hydraulischen Betätigungseinrichtung für die Kupplungsanordnungen zugeordnete Pumpenanordnung in einem Umlaufmodus betreibbar sind, in dem durch Umwälzen von Betriebsflüssigkeit unabhängig von einem Zufuhrbedarf an Betriebsmedium zu den Kupplungsanordnungen bzw. unabhängig von der Betätigung der Kupplungseinrichtung Wärmeenergie in das Betriebsmedium eingetragen wird, wobei ein Bypass freischaltbar ist, um das Betriebsmedium an den Kuppelungsanordnungen vorbei umwälzen zu können und wobei eine Steuereinrichtung dafür angelegt ist, auf ein bevorstehendes Starten des Kraftfahrzeuges indizierendes Ereignis anzusprechen und in Reaktion auf das indizierte Ereignis den Umwälzbetrieb einzuleiten. Diesem Erfindungsvorschlag liegt die Tatsache zugrunde, dass durch Umwälzen von Flüssigkeit Energie in diese eingetragen wird, so dass sich die Flüssigkeit erwärmt. Nach dem Erfindungsvorschlag ist also vorgesehen, die Betriebsflüssigkeit dadurch zu erwärmen und somit die Schleppmomente dadurch zu reduzieren, dass die Betriebsflüssigkeit durch Betreiben der betreffenden Pumpenanordnung bzw. Flusseinstelleinrichtung im Umwälzmodus umgewälzt und damit erwärmt wird. Vorzugsweise ist ein Bypass freischaltbar, um das Betriebsmedium an den Kupplungsanordnungen vorbei umwälzen zu können, so dass durch das Umwälzen selbst die Schleppmomente nicht erhöht werden.

Weiterbildend wird vorgeschlagen, dass eine Steuereinrichtung dafür ausgelegt ist, auf ein ein bevorstehendes Starten des Kraftfahrzeug indizierendes Ereignis anzusprechen und in Reaktion hierauf den Umwälzbetrieb einzuleiten. Beispielsweise kann bei Verwendung einer elektrischen Kühlöl/Druckölpumpe der erfindungsgemäße "Aufwärmvorgang" bereits dann eingeleitet werden, wenn der Fahrer per Fernbedienung das Fahrzeug öffnet oder/und die Fahrertür geöffnet wird. Man kann zur Einsparung elektrischer Energie (etwa um das Anlassen eines Verbrennungsmotors sicherzustellen) auch vorsehen, dass der Umlaufbetrieb erst dann eingeleitet wird, wenn der Verbrennungsmotor läuft.

Allgemein wird vorgeschlagen, dass eine/die Steuereinrichtung dafür ausgelegt ist, den Umwälzbetrieb automatisch dann einzuleiten, wenn wenigstens eine Positiv-Bedingung erfüllt oder/und wenigstens eine Negativ-Bedingung nicht erfüllt ist. Ferner wird allgemein vorgeschlagen, dass eine/die Steuereinrichtung dafür ausgelegt ist, den Umwälzbetrieb automatische zu beenden, wenn wenigstens eine Positiv-Bedingung erfüllt oder/und wenigstens eine Negativ-Bedingung nicht erfüllt ist.

Je nach Auslegung des Kraftfahrzeugs im Hinblick auf den Tieftemperaturbetrieb ist es vorstellbar, dass ein Losfahren erst dann erlaubt wird, wenn die Betriebsflüssigkeit (das Öl) eine hinreichend hohe Temperatur bzw. eine solche Viskosität erreicht hat, dass ein ordnungsgemäßes Schalten möglich ist. Es wird insbesondere vorgeschlagen, dass eine/die Steuereinrichtung dafür ausgelegt ist, ein Starten der Antriebseinheit in Abhängigkeit von einem momentanen Viskositätszustand des Betriebsmediums freizugeben und zu sperren.

Dieser Vorschlag ist von allgemeinem Interesse, bezieht sich also nicht nur auf das Aufwärmen der Betriebsflüssigkeit durch Umwälzen, sondern speziell auch auf alle anderen Möglichkeiten zur Aufwärmung der Betriebsflüssigkeit vor dem Fahrtantritt.

Es wird deshalb für ein Kraftfahrzeug, umfassend einen Antriebsstrang, der aufweist: eine Antriebseinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine Steuereinrichtung dafür ausgelegt ist, ein Starten der Antriebseinheit in Abhängigkeit von einem momentanen Viskositätszustand des Betriebsmediums freizugeben und zu sperren.

Allgemein erscheint die Erwärmung der Betriebsflüssigkeit durch entsprechenden Betrieb der Kupplungseinrichtung von besonderem Interesse. Hierzu kann vorgesehen sein, dass eine/die Steuereinrichtung dafür ausgelegt ist, vermittels einer vorzugsweise hydraulischen Betätigungseinrichtung die Kupplungsanordnungen zu betätigen und in einem Warmlaufmodus wenigstens eine, vorzugsweise beide Kupplungsanordnung mit Schlupf zu betreiben.

In diesem Zusammenhang wird insbesondere daran gedacht, dass die Steuereinrichtung dafür ausgelegt ist, die wenigstens eine Kupplungsanordnung mit Schlupf bei stehendem Fahrzeug gegen eine Abbremswirkung einer Bremseinrichtung arbeiten zu lassen oder/und die wenigstens eine Kupplungsanordnung bei fahrendem Fahrzeug mit Schlupf zu betreiben. Ein Schleifenlassen einer Kupplungsanordnung bzw. der Kupplungsanordnungen bei eingelegtem Gang gegen eine Bremseinrichtung sollte vorzugsweise in einem hohen Gang stattfinden, da hier ein relativ kleines Antriebsmoment an den Rädern wirkt und die Bremseinrichtung damit ein relativ kleines Moment (Bremsmoment) aufbringen muss, um das Fahrzeug zu halten bzw. ein gewünschtes resultierendes Fahrmoment einzustellen.

Im Zusammenhang mit allen Erfindungsvorschlägen sowie auch unabhängig hiervon ist es sinnvoll, Vorbereitungs- und Unterstützungsmaßnahmen vorzusehen, um das Abstellen des Kraftfahrzeugs oder/und das Gangeinlegen so vorzubereiten, dass das Schleppmomentproblem zumindest gemildert ist, und um durch gezielte Maßnahmen das Losbrechen der Lamellen, also die Überwindung des Haftmoments, zu fördern bzw. zu unterstützen.

So wird zur Vorbereitung des Abstellens speziell vorgeschlagen, dass eine Pumpenanordnung oder Flusseinstelleinrichtung durch eine/die Steuereinrichtung ansteuerbar ist, um einen momentanen Betriebsflüssigkeitsfluss zu den Lamellen-Kupplungsanordnungen einzustellen, und dass die Steuereinrichtung dafür ausgelegt ist, zum Vorbereiten des Abstellens des Kraftfahrzeugs oder beim Abstellen des Kraftfahrzeugs bei ausgerückten Kupplungsanordnungen für ein vorgegebenes Zeitintervall einen überhöhten Betriebsflüssigkeitsfluss einzustellen, um die Lamellen der Kupplungsanordnungen vermittels des Betriebsflüssigkeitsflusses auseinander zu drücken. Nach diesem Weiterbildungsvorschlag ist vorgesehen, den Betriebsflüssigkeitsstrom, insbesondere Kühlölstrom, zu den Kupplungsanordnungen zu deren Kühlung vorübergehend stark anzuheben, um durch diesen Strom die Lamellen bei geöffneter Kupplungsanordnung auseinander zudrücken. Diese Maßnahme kann vorteilhaft sowohl beim Abstellen des Kraftfahrzeugs mit eingelegten Gängen als auch beim Abstellen des Kraftfahrzeugs mit ausgelegten Gängen angewendet werden und ist von allgemeinem Interesse.

Demgemäß wird nach einem 3. Hauptaspekt der Erfindung für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass die Pumpenanordnung oder Flusseinstellanordnung durch eine Steuereinrichtung ansteuerbar ist, um einen momentanen Betriebsflüssigkeitsfluss zu den Lamellen-Kupplungsanordnungen einzustellen, und dass die Steuereinrichtung dafür ausgelegt ist, ein bevorstehendes Abstellen des Kraftfahrzeugs oder ein Abstellen des Kraftfahrzeugs zu erkennen und in Vorbereitung des Abstellens oder beim Abstellen bei ausgerückten Kupplungsanordnungen für ein vorgegebenes Zeitintervall einen überhöhten Betriebsflüssigkeitsfluss einzustellen, um die Lamellen der Kupplungsanordnungen vermittels des Betriebsflüssigkeitsflusses auseinander zu drücken.

Vorzugsweise ist die Steuereinrichtung dafür ausgelegt, den überhöhten Betriebsflüssigkeitsfluss bedarfsweise dann einzustellen, wenn wenigstens eine Positiv-Bedingung erfüllt oder/und wenigstens eine Negativ-Bedingung nicht erfüllt ist.

Eine weitere vorteilhafte Maßnahme ist, vor dem Abstellen des Fahrzeugs die Antriebseinheit kurz auf vergleichsweise hohe Drehzahlen zu bringen (beispielsweise > 2000U/min), um durch die dadurch erhöhten Fliehkräfte die Betriebsflüssigkeit (das Kühlöl) aus den Kupplungsanordnungen zu schleudern. Es wird speziell vorgeschlagen, dass eine/die Steuereinrichtung dafür ausgelegt ist, zum Vorbereiten des Abstellens des Kraftfahrzeugs oder/und beim Abstellen des Kraftfahrzeugs für ein vorgegebenes Zeitintervall bei ausgerückten Kupplungsanordnungen die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

Dieser Vorschlag ist sowohl im Zusammenhang mit einem Abstellen des Kraftfahrzeugs mit eingelegten Gängen als auch im Zusammenhang mit einem Abstellen des Fahrzeugs mit ausgelegten Gängen vorteilhaft und überdies von allgemeinem Interesse.

Demgemäß wird nach einem 4. Hauptaspekt der Erfindung für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine der Antriebseinheit zugeordnete Steuereinrichtung dafür ausgelegt ist, ein bevorstehendes Abstellen des Kraftfahrzeugs oder ein Abstellen des Kraftfahrzeugs zu erkennen und in Vorbereitung des Abstellens oder beim Abstellen für ein vorgegebenes Zeitintervall bei ausgerückten Kupplungsanordnungen die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

Für ein besonders effektives Freischleudern der Kupplungsanordnungen kann die Steuereinrichtung vorteilhaft dafür ausgelegt sein, erst die Zufuhr von Betriebsflüssigkeit zu den Kupplungsanordnungen zu unterbrechen und dann für das vorgegebene Zeitintervall die Antriebseinheit bei der gegenüber der Leerlaufdrehzahl deutlich erhöhten Drehzahl zu betreiben.

Ferner kann die Steuereinrichtung vorteilhaft dafür ausgelegt sein, die Antriebseinheit bedarfsweise dann mit der gegenüber der Leerlaufdrehzahl deutlich erhöhten Drehzahl zu betreiben, wenn wenigstens eine Positiv-Bedingung erfüllt oder/und wenigstens eine Negativ-Bedingung nicht erfüllt ist.

Zur Vorbereitung des Gangeinlegens bzw. Erleichtern des Gangeinlegens wird vorgeschlagen, dass eine/die Steuereinrichtung dafür ausgelegt ist, zum Vorbereiten eines Einlegens wenigstens eines Getriebeganges oder/und beim Einlegen des wenigstens einen Getriebeganges für ein vorgegebenes Zeitintervall bei wenigstens einer ausgerückten Kupplungsanordnung oder/und höchstens einem eingelegten Getriebegang die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen. So kann nach dem Motorstart zur Unterstützung des Gangeinlegens, wenn kein Gang eingelegt ist bzw. wurde, die Motordrehzahl erhöht werden, um die auf die Betriebsflüssigkeit (das Kühlöl) damit erhöhte Fliehkraftwirkung zu nutzen, um das Lamellenpaket bzw. die Lamellenpakete freizuschleudern und damit die Schleppmomente zu reduzieren, so dass das Gangeinlegen erleichtert ist. Dieser Erfindungsvorschlag ist auch von allgemeinem Interesse.

Demgemäß wird nach einem 5. Hauptaspekt der Erfindung für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine der Antriebseinheit zugeordnete Steuereinrichtung dafür ausgelegt ist, ein bevorstehendes Einlegen des wenigstens einen Getriebegangs oder ein Einlegen des wenigstens einen Getriebegangs zu erkennen und in Vorbereitung des Einlegens oder/und beim Einlegen für ein vorgegebenes Zeitintervall bei ausgerückten Kupplungsanordnungen die Antriebseinheit bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

Es wird insbesondere daran gedacht, die Antriebseinheit bei ausgerückten Kupplungsanordnungen oder/und ohne eingelegten Getriebegang bei der gegenüber der Leerlaufdrehzahl deutlich erhöhten Drehzahl zu betreiben.

Weiterbildend wird vorgeschlagen, dass die Steuereinrichtung dafür ausgelegt ist, erst die Zufuhr von Betriebsflüssigkeit zu den Kupplungsanordnungen zu unterbrechen und dann für das vorgegebene Zeitintervall die Antriebseinheit bei der gegenüber der Leerlaufdrehzahl deutlich erhöhten Drehzahl zu betreiben. Man kann die Steuereinrichtung vorteilhaft dafür auslegen, die Antriebseinheit bedarfsweise dann mit der gegenüber der Leerlaufdrehzahl deutlich erhöhten Drehzahl zu betreiben, wenn wenigstens eine Positiv-Bedingung erfüllt oder/und wenigstens eine Negativ-Bedingung nicht erfüllt ist.

Zur Unterstützung des Losbrechens der Lamellen wird vorgeschlagen, dass eine/die Steuereinrichtung dafür ausgelegt ist, zur Vorbereitung des Einlegens eines Getriebegangs bei stehender oder/und laufender Antriebseinheit vermittels einer vorzugsweise hydraulischen Betätigungseinrichtung die Kupplungsanordnungen wenigstens einmal, vorzugsweise mehrmals aufeinanderfolgend im Ein- und Ausrücksinn zu betätigen, um durch mechanische Verspannung der Kupplungsanordnungen oder/und Verschiebung der Lamellen ein Lösen von Lamellen voneinander, die unter Vermittlung von Betriebsflüssigkeit aneinander haften, zu erreichen oder zumindest zu unterstützen. Es hat sich nämlich herausgestellt, dass etwa bei hydraulisch betätigbaren Kupplungsanordnungen mit in die Kupplungseinrichtung integrierten hydraulischen Nehmerzylindern durch mehrmaliges Betätigen der Kolben der beiden Kupplungsanordnungen die Kupplungsanordnungen verspannt werden und dass leichte Verschiebungen der Lamellen auftreten. Die Art und Weise der Betätigung der Kupplungsanordnungen spielt im Zusammenhang mit dem Vorschlag aber letztlich keine Rolle. Die Betätigung der Kupplungsanordnungen kann vorteilhaft sowohl bei stehendem als auch bei laufendem Motor erfolgen. Bereits diese Betätigung kann ausreichen, um ein Losbrechen der Lamellen zu erreichen. Diese Betätigung kann vor dem Anlassen des Motors bei einem mit eingelegten Gängen abgestellten Fahrzeug wie auch bei einem mit ausgelegten Gängen abgestellten Fahrzeug vorteilhaft durchgeführt werden, und ferner, ggf. bedarfsweise, nach Anlassen des Motors. Der Vorschlag ist auch unabhängig von den anderen Aspekten der Erfindung von Interesse.

Demgemäß wird nach einem 6. Hauptaspekt der Erfindung für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, wobei den Kupplungsanordnungen eine Steuereinrichtung zugeordnet ist, die dafür ausgelegt ist, die Kupplungsanordnungen vermittels einer vorzugsweise hydraulischen Betätigungseinrichtung zu betätigen, vorgeschlagen, dass die Steuereinrichtung dafür ausgelegt ist, zur Vorbereitung des Einlegens eines Getriebegangs bei stehender oder/und laufender Antriebseinheit vermittels der Betätigungseinrichtung die Kupplungsanordnungen wenigstens einmal, vorzugsweise mehrmals aufeinanderfolgend im Ein- und Ausrücksinn zu betätigen, um durch mechanische Verspannung der Kupplungsanordnungen oder/und Verschiebung der Lamellen ein Lösen von Lamellen voneinander, die unter Vermittlung von Betriebsflüssigkeit aneinander haften, zu erreichen oder zumindest zu unterstützen.

Die Steuereinrichtung kann dafür ausgelegt sein, die Kupplungsanordnungen im Ein- und Ausrücksinn im Hinblick auf das Lösen der Lamellen voneinander bedarfsweise dann zu betätigen, wenn wenigstens eine Positiv-Bedingung erfüllt oder/und wenigstens eine Negativ-Bedingung nicht erfüllt ist.

Das Voneinanderlösen der Lamellen kann auch dadurch erreicht oder zumindest gefördert werden, dass bei laufender Antriebseinheit bewusst Schwingungen in die Kupplungseinrichtung eingebracht werden. Hierzu wird speziell vorgeschlagen, dass eine/die Steuereinrichtung dafür ausgelegt ist, durch entsprechende Ansteuerung der laufender Antriebseinheit auf die Kupplungseinrichtung wirkende Drehungleichförmigkeiten bzw. Drehzahlungleichförmigkeiten, insbesondere Drehschwingungen, im Antriebstrang gezielt zu erzeugen, um ein Lösen von Lamellen voneinander, die unter Vermittlung von Betriebsflüssigkeit aneinander haften, zu erreichen oder zumindest zu unterstützen. Besonders vorteilhaft ist, wenn diese Drehzahlungleichförmigkeiten, insbesondere Schwingungen, im Bereich der Eigenfrequenzen der Kupplungsanordnungen oder/und der Lamellen liegen, so dass gewissermaßen gezielt auf die aneinander anhaftenden Lamellen eingewirkt wird. Dieser Weiterbildungsvorschlag ist auch von allgemeinem Interesse.

Demgemäß wird nach einem 7. Hauptaspekt der Erfindung für ein Kraftfahrzeug, umfassend einen Antriebsstrang, der aufweist: eine Antriebeinheit, ein Getriebe mit einer ersten Getriebeeingangswelle und einer zweiten Getriebeeingangswelle und eine Kupplungseinrichtung mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, vorgeschlagen, dass eine der Antriebseinheit zugeordnete Steuereinrichtung dafür ausgelegt ist, durch entsprechende Ansteuerung der laufender Antriebseinheit auf die Kupplungseinrichtung wirkende Drehzahlungleichförmigkeiten, insbesondere Drehschwingungen, im Antriebstrang gezielt zu erzeugen, um ein Lösen von Lamellen voneinander, die unter Vermittlung von Betriebsflüssigkeit aneinander haften, zu erreichen oder zumindest zu unterstützen.

Die Steuereinrichtung kann dafür ausgelegt sein, die auf die Kupplungseinrichtung wirkenden Drehzahlungleichförmigkeiten vermittels der Antriebseinheit bedarfsweise dann zu erzeugen, wenn wenigstens eine Positiv-Bedingung erfüllt oder/und wenigstens eine Negativ-Bedingung nicht erfüllt ist.

Im Falle einer als Verbrennungsmotor ausgeführten Antriebseinheit kann die Steuereinrichtung dafür ausgelegt sein, die auf die Kupplungseinrichtung wirkenden Drehzahlungleichförmigkeiten durch Zylinderabschaltungen oder/und nicht einheitliche oder/und wechselnde Versorgung der Zylinder mit Kraftstoff zu erzeugen. Die gezielt eingebrachten Schwingungen können also z.B. durch Zylinderabschaltungen erreicht werden, wobei vorgesehen sein kann, dass immer die gleichen oder abwechselnd verschiedene Zylinder abgeschaltet werden. Ferner können die Zylinder jeweils mit unterschiedlichen Mengen an Kraftstoff versorgt werden, um bewusst Drehungleichförmigkeiten zu erzeugen.

Im Folgenden wird die Erfindung anhand von Ausführungsbeispielen näher erläutert, die einerseits verschiedene Erfindungsvorschläge nach den verschiedenen Aspekten der Erfindung unmittelbar beispielhaft ausführen bzw. bei denen die verschiedenen Erfindungsvorschläge nach den verschiedenen Aspekten der Erfindung vom Fachmann ohne weiteres durch routinemäßige Anwendung seiner Fachkenntnisse umgesetzt werden können (beispielsweise durch entsprechende Programmierung einer einem Getriebe oder/und einer Kupplungseinrichtung oder/und einer Antriebseinheit des Antriebsstrangs zugeordneten elektrischen Steuereinheit auf Mikroprozessorbasis), ohne dass es noch erfinderischer Tätigkeit bedarf.
- Fig. 1: zeigt in Teilfig. 1a in einer schematischen, beispielhaften Darstellung eine Grundstruktur eines erfindungsgemäßen Kupplungssystems mit einer nasslaufenden Doppelkupplung und in Teilfig. 1 b in einer schematischen Darstellung einen erfindungsgemäßen Kraftfahrzeug-Antriebsstrang samt zugeordneter, die Antriebseinheit, die Doppelkupplung und ein Lastschaltgetriebe ansteuernder Steuereinrichtung und zugehörigen Betätigungseinrichtungen.
- Fig. 2: zeigt ein erstes Ausführungsbeispiel eines erfindungsgemäßen Kupplungssystems.
- Fig. 3: zeigt das Kupplungssystem der Fig. 2 in Kombination mit einem zugeordneten Getriebe.
- Fig.4: zeigt eine Ausgestaltungsmöglichkeit für einen Kühlölkreislauf des Getriebes der Fig. 3.
- Fig. 5: zeigt in der Teilfig. 5a) ein Diagramm, das eine typische Abhängigkeit des in einer Lamellen-Kupplungsanordnung auftretenden Schleppmoments bei tiefen Temperaturen als Funktion der Differenzdrehzahl angibt, und in der Teilfig. 5b) ein entsprechendes Diagramm, das einen typischen Verlauf des Schleppmoments bei sehr kleinen Differenzdrehzahlen samt dem Losbrechmoment im Falle von zusammenklebenden Lamellen angibt.
- Fig. 6: zeigt exemplarisch eine typische Getriebe-Synchronisiereinrichtung des Stands der Technik.
- Fig. 7: zeigt schematisch ein automatisiertes Doppelkupplungsgetriebe samt vorgeschalteter Doppelkupplung.
- Fig. 8: zeigt ein Beispiel für einen erfindungsgemäßen Schaltablauf für eine Zug-Rück-Schaltung.

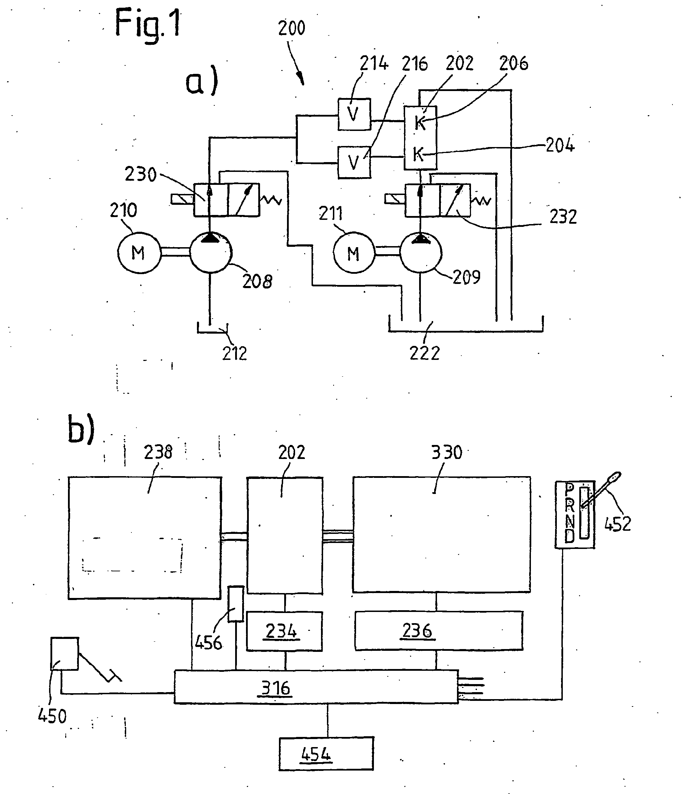

Fig. 1 zeigt in Teilfig. 1a schematisch ein Kupplungssystem 200, das eine nasslaufende Doppelkupplung 202 mit einer ersten, radial äußeren Kupplungsanordnung 206 und einer zweiten, radial inneren Kupplungsanordnung 204 aufweist. Bei den Kupplungsanordnungen 204 und 206 handelt es sich um nasslaufende Kupplungsanordnungen, beispielsweise um nasslaufende Lamellen-Kupplungsanordnungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden. Beispiele für derartige Doppelkupplungen sind z. B. in der DE 100 04 179 A1 und in weiteren Offenlegungsschriften bzw. Patentanmeldungen der Anmelderin offenbart.

Das Kupplungssystem 200 weist zwei voneinander unabhängige Pumpen, nämlich eine erste Pumpe 208 und eine zweite Pumpe 209, auf, die vorzugsweise jeweils durch einen Elektromotor 210 bzw. 211 angetrieben werden. Die erste Pumpe 208 stellt Druckmedium, insbesondere Drucköl, bei einem vergleichsweise hohen Druck bereit, der zur Betätigung der Kupplungsanordnungen 204 und 206 der Doppelkupplung 202 ausreicht. Zur wahlweisen Betätigung der Kupplungsanordnungen sind diese, genauer deren hydraulische Nehmerzylinder, jeweils über ein zugeordnetes Ventil 214 bzw. 216 an der Pumpe 208 angeschlossen. Die Pumpe saugt Druckmedium aus einem Reservoir 212 an.

Die zweite Pumpe 209 stellt einen vergleichsweise großen Volumenstrom an Kühlmedium, insbesondere Kühlöl bereit, das zur Kühlung der Kupplungsanordnungen 204 und 206 dient. Die Pumpe 209 saugt das Kühlmedium, ggf. Öl, aus einem Reservoir 222 an. Es sei angemerkt, dass es nicht zwingend ist, dass es sich bei dem Reservoir 222 um ein gegenüber dem Reservoir 212 gesondertes Reservoir handelt.

Um bei tiefen Temperaturen das Kühlöl schneller auf Betriebstemperatur bringen zu können, ist auf der Abgabeseite der Pumpe 208 sowie auf der Abgabeseite der Pumpe 209 ein Umschaltventil 230 bzw. 232 vorgesehen. Mittels der Ventile kann eine Bypassleitung zum Vorratsbehälter 222 freigeschaltet werden, um durch Umlaufenlassen des Betriebsmediums bzw. Druckmediums an der Kupplungseinrichtung (Doppelkupplung) 202 vorbei Wärme in das Öl einzubringen und dieses damit zu erwärmen. Die Aufwärmzeit zur Erreichung der Betriebstemperatur kann hierdurch deutlich verkürzt werden und es kann dementsprechend relativ schnell ein Zustand erreicht werden, in dem in den Kupplungsanordnungen 204 und 206 keine störenden Schleppmomente auf Grund temperaturbedingt zu hoher Viskosität (zu großer Zähigkeit) mehr auftreten.

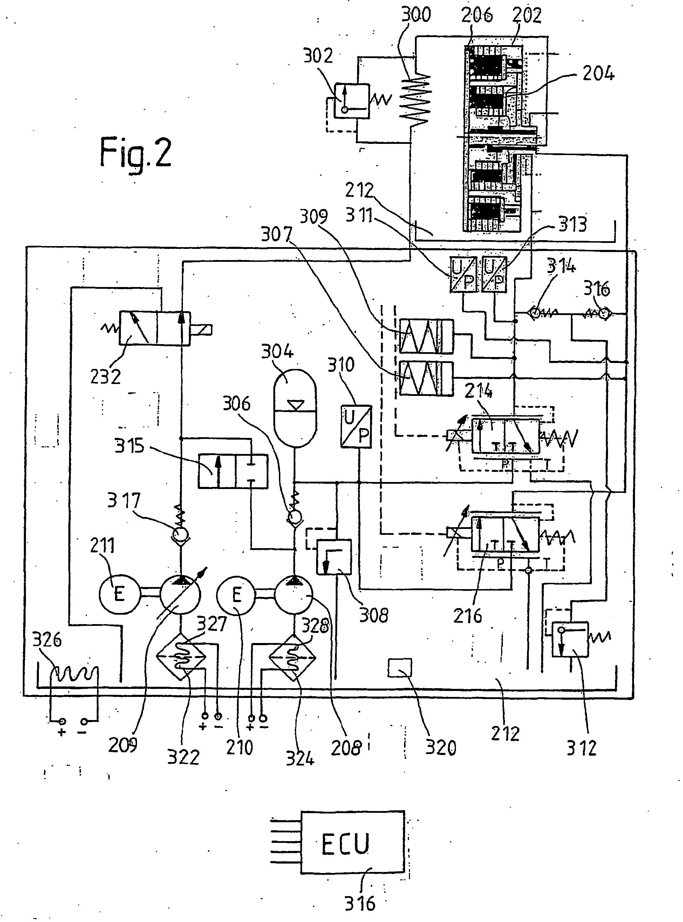

Teilfig. 1 b zeigt einen erfindungsgemäßen Kraftfahrzeug-Antriebsstrang mit der Doppelkupplung 202, einer dieser zugeordneten Betätigungseinrichtung 234 (beispielsweise von der in Fig. 2 gezeigten, die Steuerventile 214 und 216 umfassenden Art), einem mittels einer Betätigungseinrichtung 236 automatisiert betätigbaren Lastschaltgetriebe 330 mit zwei koaxial verlaufenden Getriebeeingangswellen und einer als Verbrennungsmotor ausgeführten Antriebseinheit 238. Die genannten Komponenten sind direkt oder über die jeweils zugeordnete Betätigungseinrichtung von einer beispielsweise als ECU oder/und TCU bezeichenbaren Steuereinrichtung 316 steuerbar. Die Steuereinrichtung 316, die auch als Steuereinheit bezeichenbar ist, kann aus mehreren miteinander kommunizierenden Teil-Steuereinheiten bestehen und Signale von diversen Sensoren und Betätigungselementen erhalten, so etwa von einem Schalthebel 452, der beispielsweise die Schaltstellungen P (Parkmodus), R (Rückwärtsfahrmodus), N (Neutralmodus) und D (Vorwärtsfahrmodus) aufweist, und von einem Bremspedal 450. Ein von der Steuereinrichtung angesteuertes Bremssystem des Fahrzeugs ist in Fig. 1 b mit 454 bezeichnet, und ein von der Steuereinrichtung ansteuerbarer Anlasser ist in Fig. 1 b mit 456 bezeichnet.

Fig. 2 zeigt ein Ausführungsbeispiel eines erfindungsgemäßen Kupplungssystems der in Fig. 1 gezeigten Grundstruktur in näheren Einzelheiten.

Gemäß Fig. 2 wird das Kühlöl der Doppelkupplung 202 über einen Wärmetauscher 300 zugeführt, da es beispielsweise im Falle eines längeren Schlupfbetriebs zu einer merklichen Temperaturerhöhung auch des Öls im Ölsumpf 212 kommen kann. Durch den Wärmetauscher 300 wird die Öltemperatur auf einem zur Kühlung der Doppelkupplung hinreichenden Temperaturniveau gehalten. Da das Kühlöl bei tieferen Temperaturen recht dickflüssig werden kann und aufgrund des Strömungswiderstands des Wärmetauschers 300 bei besonders tiefen Temperaturen unter Umständen nicht mehr genügend Kühlöl die Doppelkupplung erreichen würde bzw. ein zu hoher Öldruck zu Beschädigungen führen könnte, ist ein beispielsweise unter Federvorspannung stehendes Bypassventil 302 vorgesehen, das dann, wenn der Kühlöldruck stromabwärts des Ölkühlers 300 eine vorgegebene Druckschwelle übersteigt, aufmacht und das Kühlöl am Ölkühler 300 vorbei zur Doppelkupplung durchlässt.

Beim Ausführungsbeispiel der Fig. 2 ist im Kupplungsbetätigungs-Druckölkreis ein ein unter Druck stehendes Gaspolster aufweisender Druckölspeicher 304 eingebaut, der von der Pumpe 208 über ein Rückschlagventil 306 geladen wird und über das Ventil 214 und das Ventil 216 an den Betätigungs-Nehmerzylindern der beiden Kupplungsanordnungen 204 und 206 angeschlossen ist. Der Druckölspeicher 304 sorgt für ein gleichmäßiges Druckniveau, was insbesondere im Falle einer Ausbildung der Pumpe 208 als Kolbenpumpe zweckmäßig ist, und ermöglicht, dass für die Pumpe 208 eine Pumpe mit besonders kleinem Fördervolumen ausreicht. Das von der Pumpe 208b pro Zeiteinheit abgegebene Ölvolumen kann also kleiner sein als das während einer Kupplungsbetätigung pro Zeiteinheit benötigte Druckölvolumen.

Der Druckölkreis zwischen dem Rückschlagventil 306 und den Ventilen 214 und 216 ist durch ein Druckbegrenzungsventil 308 gegen einen übermäßig hohen, ggf. zu Beschädigungen führenden Druck des Drucköls gesichert. Der durch den Füllzustand des Speichers 304 bestimmte Druck in diesem Druckölkreis wird durch einen Drucksensor 310 erfasst. Ferner kann den Abgabeseiten der Ventile 214 und 216 eine Drucksensoranordnung, beispielsweise je ein Drucksensor 311 bzw. 313 für beide Ventile, zugeordnet sein, die die jenseits der Ventile herrschenden, auf die hydraulischen Nehmerzylinder wirkenden Hydraulikdrücke erfasst.

Ein weiteres Druckbegrenzungsventil 312 sorgt dafür, dass der jenseits den Ventilen 214 und 216 herrschende, auf die hydraulischen Nehmerzylinder der Kupplungseinrichtungen wirkende Druck einen Maximalwert nicht übersteigt, beispielsweise um ebenfalls Beschädigungen vorzubeugen. Über zwei Rückschlagventile 314 und 316 wird erreicht, dass ein Druckbegrenzungsventil ausreicht, um den Betätigungsdruck von beiden hydraulischen Nehmerzylindern zu überwachen.

Zur Gewährleistung einer guten Regelbarkeit/Steuerbarkeit der Kupplungsbetätigung kann ein jeweiliger Hydrodämpfer 307 bzw. 309 (beispielsweise umfassend einen federbelasteten Kolben, eine Metallbalgfeder oder dergleichen) parallel zu den beiden hydraulischen Nehmerzylindern der Kupplungseinrichtungen 204 und 206 angeschlossen sein. Durch derartige Hydrodämpfer werden Druckspitzen im Hydrauliksystem abgedämpft.

Für den Fall, dass bei tiefen Temperaturen, also einer hohen Viskosität des Öls, der Druck des Kühlöls zur Kühlung der Kupplung nicht ausreicht, etwa weil die für die Pumpe 209 verwendete hydrodynamische Pumpe keinen hinreichenden Druck erzeugen kann, ist bei der Anordnung gemäß Fig. 2 ein Ventil 315 vorgesehen, über das ein kleiner Volumenstrom aus dem von der Pumpe 208 bereitgestellten Druckölstrom abgezweigt werden kann, um eine Art "Notkühlung" der Kupplungsanordnungen vorzusehen, wenn dies erforderlich ist. Da die ein Öffnen des Ventils 315 erforderlich machende hohe Viskosität des Kühlöls nur bei tiefen Temperaturen vorkommt, bei denen sowieso nur ein geringer Kühlungsbedarf für die Doppelkupplung besteht, reicht ein relativ kleiner "Notkühlölstrom" aus. Diese "Notkühlung" ist überdies nur solange erforderlich, bis die Temperatur des Öls und damit die Viskosität des Öls ausreicht, um eine hinreichende Förderleistung der Kühlölpumpe 209 zu gewährleisten. Anstelle eines Ventils 315 könnte auch eine sogenannte Blende oder Drossel oder dergleichen vorgesehen sein, über die ständig ein kleiner Volumenstrom aus dem von der Pumpe 208 bereitgestellten Druckölstrom in den Kühlkreislauf abgezweigt wird. Ist das das Kühlöl nur im Bedarfsfall abzweigende Ventil 315 vorgesehen, kann die Pumpe 208 eventuell auch kurzfristig in einem Überlastbetrieb betrieben werden, um in der kurzen Zeitspanne bis zur hinreichenden Erwärmung des Öls ausreichend Kühlöl bereitzustellen. Da es sich in der Regel nur um sehr kurze Bedarfszeiträume handelt, wird die Lebensdauer der Pumpe 208 dadurch nicht wesentlich verkürzt. Um unabhängig vom Betriebszustand der Pumpe 209 zu gewährleisten, dass von der Druckpumpe 208 in den Kühlkreislauf geliefertes Öl nicht zurück in den Ölsumpf 212 fließt, kann mit der Pumpe 209 ein Rückschlagventil 317 in Reihe geschaltet, insbesondere der Pumpe nachgeschaltet, sein.

Auch beim Beispiel der Fig. 2 ist das Bypassventil 232 vorgesehen, um bei tiefen Temperaturen einen Umlaufmodus einstellen zu können, in dem die Pumpe 209 das Kühlöl an der Doppelkupplung 202 vorbei umwälzt. Man kann das Ventil auch so ausführen, dass ein Teil des von der Pumpe 209 bereitsgestellten Kühlölflusses zur Doppelkupplung 202 geführt wird und der andere Teil über die Bypassleitung zum Ölsumpf 212 zurückgeführt wird. Damit ist zumindest ein eingeschränkter Kupplungsbetrieb bzw. Fahrbetrieb des den Antriebsstrang aufweisenden Kraftfahrzeugs auch im Umwälzmodus möglich.

Fig. 2 zeigt noch eine elektronische Steuereinheit ECU (Bezugszeichen 316), die in Abhängigkeit von einer jeweiligen Führungsgröße die Steuer/ Regel-Ventile 214 und 216 betätigt. Es kann ferner vorgesehen sein, dass der Steuereinheit Messwerte von diversen Sensoren, beispielsweise vom Drucksensor 310 und anderen Drucksensoren (einschließlich ggf. den Sensoren 311 und 313), sowie von Temperaturfühlern oder Temperatursensoren zugeführt bekommt. Gedacht wird insbesondere an einen oder mehrere Temperatursensoren, die die Temperatur des Kupplungskühlölkreislaufs (Pumpe 209, Kühler 300 oder Bypassventil 302, Kupplungseinrichtung 202, Sumpf 212) erfasst. Ein entsprechender, beispielsweise im Kupplungsölsumpf 212 angeordneter und die Temperatur des im Kreislauf umlaufenden bzw. im Sumpf enthaltenen Öls erfassender Sensor 320 ist schematisch dargestellt. Die elektronische Steuereinheit kann ferner das auf die Zeiteinheit bezogene Fördervolumen der Pumpe 209 oder/und einen durchgelassenen Volumenstrom eines im Kreislauf angeordneten Volumenstrom-Einstellventils (nicht dargestellt) steuern oder regeln, beispielsweise auf Grundlage des vom Sensor 320 erfassten Temperatursignals. Auf diese Weise kann der Temperaturhaushalt der Kupplungseinrichtung 202 bzw. des Kupplungskühlölkreislaufs beeinflusst werden. Durch Einstellung des Umwälzungsgrads im Kühlkreislauf kann Einfluss auf die Abkühlgeschwindigkeit im Kühler 300 genommen werden (größeres oder kleiners ÄT am Kühler) und es können turbulente Strömungszustände einerseits oder laminare Strömungsverhältnisse andererseits ausgenutzt werden.

Der Vollständigkeit halber soll noch darauf hingewiesen werden, dass die mit 322 und 324 bezeichneten Komponenten in Fig. 2 Ölfilter darstellen. Alternativ oder zusätzlich können Ölfilter auch auf der Abgabeseite der jeweiligen Pumpe 208 bzw. 209 vorgesehen sein. Es versteht sich, dass die elektronische Steuereinheit 216 neben den Steuer-Regel-Ventilen 214 und 216 auch die Ventile 232 und 315 situationsabhängig betätigt.

Um nach dem Starten des Kraftfahrzeugs insbesondere bei tiefen Umgebungstemperaturen das Kühlöl und damit die Kupplungseinrichtung bzw. Doppelkupplung 202 auf Betriebstemperaturen zu bringen und insbesondere die Zähflüssigkeit des Kühlöls schnell soweit herabzusetzen, dass das System voll funktionsfähig ist, kann eine elektrische Öl-Erwärmungsanordnung vorgesehen sein, die beispielsweise wenigstens ein Heizelement 326 im Ölsumpf 212 oder/und wenigstens ein in die Ansaugleitung der Pumpe 209, beispielsweise in den Filter 322, integriertes Heizelement 327 aufweist. Auch in die Ansaugleitung der Pumpe 208, beispielsweise in den Filter 224, kann wenigstens ein Heizelement integriert sein. Als Heizelemente können beispielsweise etwa 30 mm x 50 mm große Heizplättchen verwendet werden, die auf ihrer Oberfläche eine Art Heizwendel aufweisen und z. B. eine Heizleistung von ca. 300 W abgeben können. Auch andersartige Heizelemente, beispielsweise in der Art von Glühkerzen für Dieselmotoren, sind einsetzbar. Eine andere Möglichkeit ist, eine Wärmeenergiespeicheranordnung, etwa ein sogenannter Latenzspeicher, vorzusehen.

Durch Integration wenigstens eines Heizelements in einen jeweiligen Ansaugtrakt der Kühlölpumpe 209 oder/und der Druckölpumpe 208 kann gezielt das tatsächlich gepumpte Öl erwärmt werden, ohne dass zwangsweise das gesamte Ölvolumen erwärmt werden muss. Dementsprechend wird elektrische Energie gespart. Ferner kann gewährleistet werden, dass nur vorgewärmtes Öl von der betreffenden Pumpe gepumpt wird.

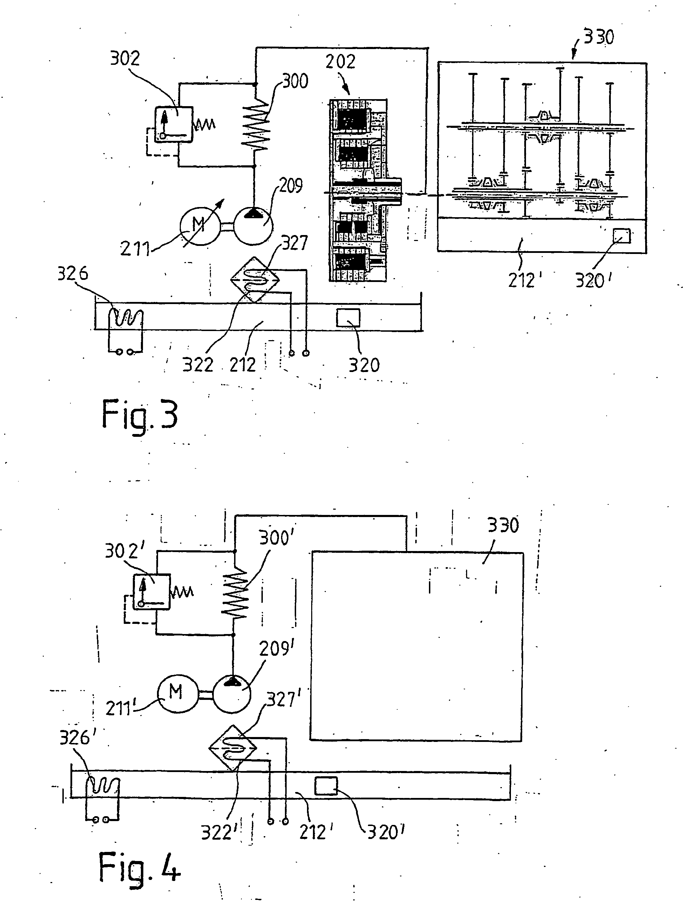

Fig. 3 zeigt das Kupplungssystem der Fig. 2 (nicht alle Komponenten sind gezeigt) in Kombination mit einem Doppelkupplungsgetriebe 330. Das vorzugsweise automatisiert betätigbare Getriebe 330 kann einen eigenen, gegenüber dem Kühlölkreislauf der Kupplungseinrichtung 202 gesonderten Kühlölkreisölauf aufweisen, beispielweise von der in Fig. 4 dargestellten Art. Eine von einem Motor 211' angetriebene Ölpumpe 209' saugt Kühlöl aus einem Reservoir (dem Getriebesumpf) 212' an. Das geförderte Kühlöl wird normalerweise über einen Kühler 300' den zu kühlenden Komponenten des Getriebes 330 zugeführt. Zur Vermeidung von zu hohen Drücken im Kühlölkreislauf bei tiefen Temperaturen ist ein beispielweise druckbetätigtes Bypassventil 302' vorgesehen, das bei Überschreitung einer Druckschwelle eine den Kühler 300' umgehende Bypassleitung freigibt. Der Getriebekühlölkreislauf entspricht insoweit dem Kupplungskühlölkreislauf gemäß Fig. 2 und 3. Der Kühler 300' mit der Bypassleitung kann, wie in Fig. 4 gezeigt, zwischen der Pumpe 209' und dem Getriebe (ggf. Automatik-Getriebe) 330 angeordnet sein. Es ist aber auch denkbar, dass Kühler und Bypass-Schaltung dem Getriebe bzw. Getriebe-Automat nachgeschaltet sind. Dem Getriebekühlölkreislauf kann ein Temperatursensor 320' zugeordnet sein, der die Temperatur des umlaufenden Kühlöls misst und entsprechende Messwerte beispielsweise an die elektronische Steuereinheit ECU der Fig. 2 liefert. Gemäß Fig. 3 und 4 ist der Temperatursensor 320' im Getriebesumpf 212' angeordnet.

In Abweichung von den vorstehenden Ausführungen zu Figuren 3 und 4 kann man für die Doppelkupplung und das Getriebe auch einen gemeinsamen bzw. situationsabhängig zusammenschaltbaren Kühlölkreislauf vorsehen.

Anstelle des druckbetätigten Bypassventils 302 im Falle des Kupplungskühlölkreislaufs bzw. 302' im Falle des Getriebekühlölkreislaufs kann ein elektrische betätigbares Umschaltventil, beispielsweise ein 3-2-Wege-Ventil vorgesehen sein, um bedarfsabhängig bzw. gemäß einer Wärmemanagement-Strategie (etwa zum gezielten Erreichen und Halten einer Soll-Betriebstemperatur) eine den Kühler 300 umgehende Bypassleitung freizugeben, so dass das Kühlöl an dem Kühler 300 bzw. 300' vorbei zur Doppelkupplung 202 bzw. zu den zu kühlenden Getriebekomponenten geführt wird, bzw. diese Bypassleitung wieder zu sperren.

Die Doppelkupplung 202 kann vorteilhaft nach einem Starten des Kraftfahrzeugs, beispielsweise im Falle von tiefen Umgebungstemperaturen, mit definiertem Schlupf betrieben werden, um das Kühlöl möglichst schnell auf Betriebstemperatur aufzuwärmen. Die Aufwärmung des Kühlöls erfolgt durch im Schlupfbetrieb an den Lamellen auftretende Reibung. Um eine Überhitzung des betreffenden Lamellenpakets bzw. der Doppelkupplung zu vermeiden und die gewünschte Erwärmung des Kühlöls möglichst schnell zu erreichen, sollte während des Schlupfbetriebs ständig ein beispielsweise von der Pumpe 209 bereitgestellter Kühlölstrom fließen. Zu näheren Einzelheiten eines derartigen Schlupfbetriebs, der sowohl bei stehendem als auch bei fahrendem Fahrzeug stattfinden kann, wird auf den Inhalt der am 15.06.2001 eingereichten deutschen Patentanmeldung Nr. 101 28 856.5 verwiesen. Der Offenbarungsgehalt dieser älteren deutschen Patentanmeldung wird durch Bezugnahme vollständig in die Offenbarung der vorliegenden Anmeldung einbezogen.

Die insbesondere bei niedrigen Außentemperaturen bei einem etwa im freien abgestellten Kraftfahrzeug auftretende hohe Viskosität eines verwendeten Kühlöls kann durchaus erhebliche Probleme verursachen. Durch die bei tiefen Temperaturen (etwa Öltemperaturen kleiner als 0°C) auftretende erhöhte Zähigkeit des Öls können in den Lamellen-Kupplungsanordnungen sehr hohe Schleppmomente auftreten (bis zu Werten größer als 25 Nm) gegenüber bei Betriebstemperatur (ca. 90°C) auftretenden Schleppmomenten beispielsweise kleiner als 2 Nm. Ferner können auf Grund von durch zwischen den Lamellen befindliches Öl zusammenklebenden Lamellen Losbrech- bzw. Loslösmomente bis über 50 Nm auftreten. In Folge der hohen Schlepp- bzw. Losbrechmomente kann ein Einlegen eines Ganges praktisch unmöglich werden, weil herkömmliche Synchronisiereinrichtungen des Getriebes nicht für die Überwindung derartig hoher Momente ausgelegt sind. Kann man keine Gänge einlegen bzw. nicht schalten, so ist eine Bewegung des Kraftfahrzeugs nicht möglich.

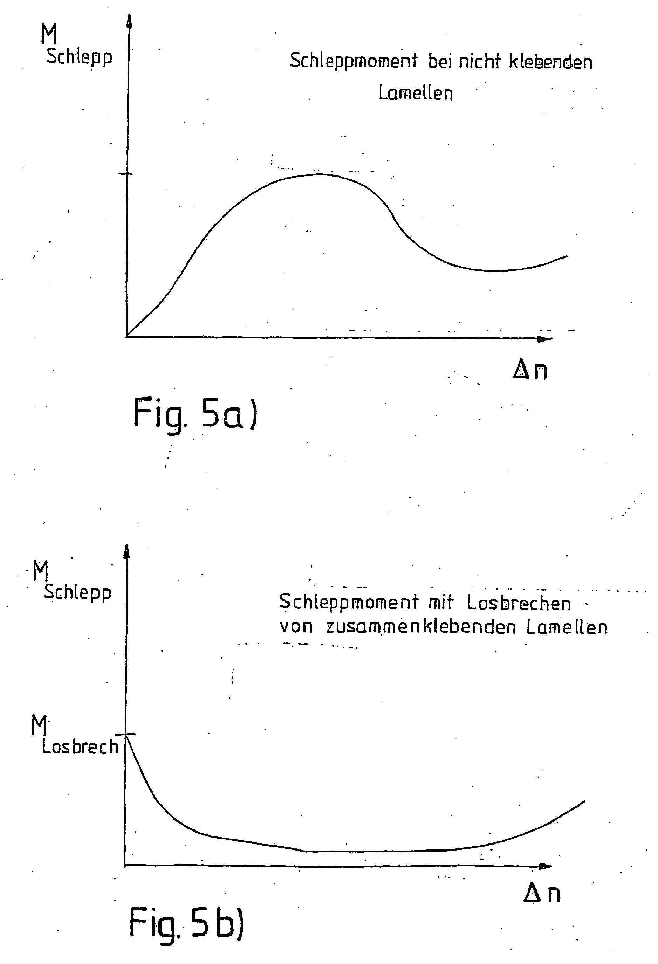

Fig. 5a zeigt einen typischen bzw. exemplarischen Verlauf des bei tiefen Temperaturen in der Kupplungseinrichtung auftretenden Schleppmoments auf Grund von zwischen den Lamellen befindlichem Kühlöl entsprechend hoher Viskosität als Funktion der Differenzdrehzahl Än zwischen Eingangsseite und Ausgangsseite der betreffenden Kupplungsanordnung. Fig. 5b zeigt das bei tiefen Temperaturen auftretende Losbrechmoment auf Grund von zusammenklebenden Lamellen und den Übergang zum Schleppmoment gemäß Fig. 5a. Ergänzend wird auf den Aufsatz "Schleppmomente an nasslaufenden Lamellenbremsen" von N. Holzer und D. Frey, Friedrichshafen, sowie B. Matthes, Heidelberg, in VDI BERICHTE 1323, Seiten 469 bis 489 auf Grund einer Tagung der VDI-Gesellschaft Entwicklung Konstruktion Vertrieb am 03. und 04.03.1997 in Fulda "Kupplungen in Antriebssystemen '97" verwiesen.

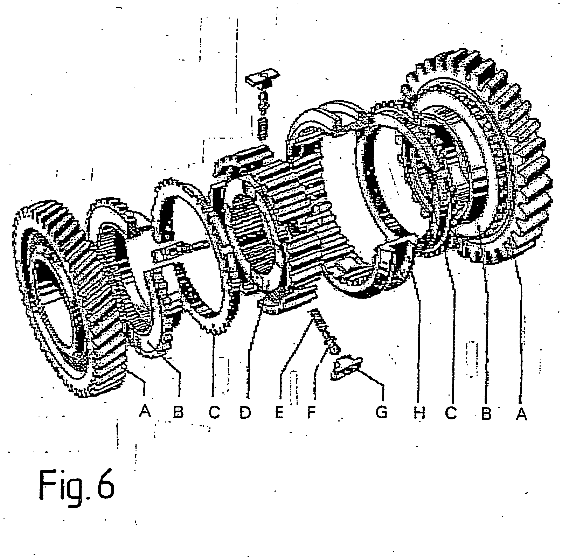

Fig. 6 zeigt ein Beispiel für eine herkömmliche Einkonus-Synchroniserung nach dem System Borg-Warner (ZF) mit einem nadelgelagerten Losrad A, einem Kupplungskörper B mit Schaltverzahnung und Reibkonus, einem Hauptfunktionsträger - Synchronring C mit Gegenkonus und Sperrverzahnung, einem Synchronkörper D mit Innenverzahnung für den Formfluss mit einer Getriebewelle und Außenverzahnung für die Schaltmuffe, eine Druckfeder E, einem Kugelbolzen F, einem Druckstück G und einer Schaltmuffe H mit Klaueninnenverzahnung. Würde man versuchen, bei stehendem Kraftfahrzeug und nicht laufendem Motor einen Gang einzulegen, so kann es passieren, dass das Einlegen des Ganges daran scheitert, dass die Schaltverzahnung des Kupplungskörpers des jeweiligen Gangrats mit den Zahnflanken des zugehörigen Gegenrads der Schaltmuffe der Synchroneinrichtung zusammentrifft, so dass die Verzahnungen nicht in Mitnahmeeingriff treten können. Das Einlegen eines Ganges ist also nur dann möglich, wenn die Schaltverzahnung des Kupplungskörpers auf die Zahnzwischenräume des zugehörigen Gegenrads trifft. Damit ist es bei herkömmlicher Ausbildung der zugeordneten Aktuatorik kein echter Lösungsansatz, wenn man daran denken sollte, zur Vermeidung des Einlegeproblems bei tiefen Temperaturen auf Grund nicht für die Überwindung der Schleppmomente ausgelegten Synchronsiereinrichtungen einen Anfahrgang bei stehendem Kraftfahrzeug im Zustand noch nicht laufender Antriebseinheit einzulegen.

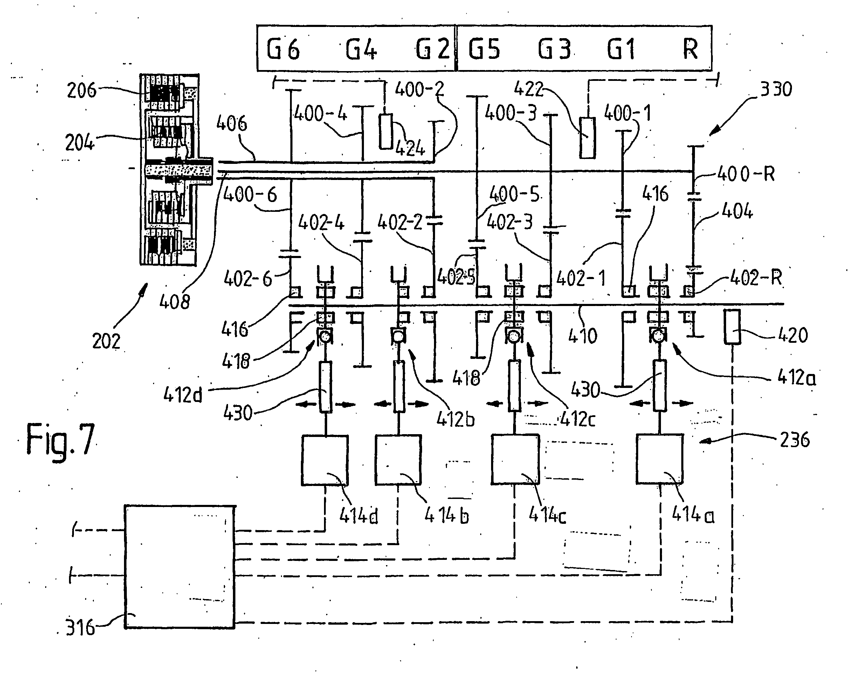

In Fig. 7 ist ein Doppelkupplungsgetriebe 330 schematisch dargestellt, dass sieben Gänge, nämlich sechs Vorwärtsgänge G1, G2, G3, G4, G5 und G6 und ein Rückwärtsgang R aufweist. Den Vorwärtsgängen ist jeweils ein Zahnradpaar, bestehend aus einem Antriebsrad 400-1, 400-2, 400-3, 400-4, 400-5 und 400-6 und einem Abtriebsrad 402-1, 402-2, 402-3, 402-4, 402-5 und 402-6, zugeordnet. Der Rückwärtsgang R weist zusätzlich zu einem Antriebsrad 400-R und einem Abtriebsrad 402-R ein die Drehrichtung umkehrendes Zwischenrad 404 auf, das mit dem Antriebsrad 400-R und dem Abtriebsrad 402-R kämmt. Die den Gängen G2, G4 und G6 zugeordneten Antriebsräder sind drehfest mit einer radial äußeren Getriebeeingangswelle 406 verbunden und die den Gängen G1, G3, G5 und R zugeordneten Antriebsräder sind drehfest mit einer radial inneren Getriebeeingangswelle 408 verbunden. Die jeweiligen Abtriebsräder sind drehbar auf einer Getriebeausgangswelle 410 gelagert und mit dieser zur Schaltung der Gänge über zugeordnete Schalt- und Synchronisiervorrichtungen 412a, 412b, 412c und 412d drehfest verbindbar. Die Schalt- und Synchronsiervorrichtungen 412a, 412c und 412d sind doppelseitig wirksam ausgebildet, d.h., dass durch diese jeweils alternativ einer von zwei Gängen schaltbar ist, im Falle der Synchronisiervorrichtung 412a der erste Vorwärtsgang G1 oder der Rückwärtsgang R, im Falle der Synchronisiervorrichtung 412c der dritte Vorwärtsgang G3 oder der fünfte Vorwärtsgang G5 und im Falle der Synchronsiervorrichtung 412d der vierte Vorwärtsgang G4 oder der sechste Vorwärtsgang G6. Die Synchronisiervorrichtung 412b hingegen ist nur einseitig wirksam ausgebildet und dient zum Schalten nur des zweiten Vorwärtsgangs G2.

Wie aus der schematischen Figur ersichtlich bzw. schon erwähnt, sind die Getriebeeingangswellen 406 und 408 koaxial zueinander angeordnet, und es sind die ungeradzahligen Gänge G1, G3 und G5 und der Rückwärtsgang R der zentral angeordneten Getriebeeingangswelle 408 und die geradzahligen Gänge G2, G4 und G6 der als Hohlwelle ausgebildeten Getriebeeingangswelle 406 zugeordnet. Die beiden Getriebeeingangswellen stehen jeweils mit nur einer der Kupplungsanordnungen 204 und 206 in Verbindung, beispielsweise die Getriebeeingangswellen 406 mit der Ausgangsseite der Kupplungsanordnung 206 und die Getriebeeingangswelle 208 mit der Ausgangsseite der Kupplungsanordnung 204. Die Eingangsseiten der beiden Kupplungsanordnungen stehen jeweils mit der Abtriebswelle der Antriebseinheit, beispielsweise ein Verbrennungsmotor, in Verbindung.

Während des normalen Fahrbetriebs ist einer der Getriebegänge eingelegt und die diesem zugeordnete Kupplungsanordnung geschlossen. Bei einem Schaltvorgang wird zuerst ein Zielgang, beispielsweise der nächsthöhere oder nächstniedrige Vorwärtsgang, geschaltet und dann erfolgt vorzugsweise die an sich bekannte Überschneidungsschaltung, bei der das Antriebsmoment von der einen zur anderen Getriebeeingangswelle verlagert wird, um ein zugkraftunterbrechungsfreies Schalten vorzusehen.

Beim gezeigten Ausführungsbeispiel ist das Doppelkupplungsgetriebe 330 als automatisiertes Schaltgetriebe ausgebildet. Dazu ist den Schalt- und Synchronisiervorrichtungen 412a bis 412d jewiels ein beispielsweise elektromotorischer Schaltstellantrieb 414a, 414b, 414c bzw. 414d zugeordnet, die auf die jeweilige Schalt- und Synchronisiervorrichtung wirken, beispielsweise durch eine kraft- oder/und formschlüssige Betätigungsverbindung. Durch die Schaltstellantriebe können die Schalt- und Synchronisiervorrichtungen in axialer Richtung bewegt und mit Stellkräften beauftragt werden, wie durch die Doppelpfeile angedeutet ist. An den Abtriebsrädern und den Schalt- und Synchronisiervorrichtungen sind Mitnahmeformationen 416 und 418 schematisch dargestellt, die zur Kopplung des jeweiligen Abtriebsrads mit der Getriebeausgangswelle 410 in gegenseitigen Eingriff treten.

Die Schaltstellantriebe sind über zugeordnete Steuerleitungen mit der Steuereinrichtung 316 verbunden und durch diese ansteuerbar. Eine Drehzahl der Getriebeausgangswelle bzw. Getriebeabtriebswelle 410 kann durch einen Drehzahlsensor 420 detektiert werden. Es können ferner noch einer jeweiligen der beiden Getriebeingangswellen zugeordnete und deren Drehzahl erfassende Drehzahlsensoren 422 und 424 vorgesehen sein, so dass die Steuereinrichtung 316 ggf. Informationen über alle drei Drehzahlen erhält. Eine andere, alternativ oder zusätzlich vorzusehende Möglichkeit ist, dass die Drehzahl der Abtriebswelle der Antriebseinheit durch einen mit der Steuereinrichtung verbundenen Drehzahlsensor erfasst wird.

Zur Erleichterung des Einlegens von Gängen bei einem mit ausgelegten Gängen abgestellten Kraftfahrzeug sind die die Betätigungsverbindungen herstellenden, beispielsweise in der Art von Schaltgabeln ausgeführten Verbindungs- und Betätigungselemente zwischen den Schalt- und Synchronisiervorrichtungen und dem jeweiligen Schaltstellantrieb elastisch ausgeführt, beispielsweise mit einem jeweiligen Federabschnit 430. Wird bei stehendem Kraftfahrzeug und noch nicht laufendem Motor durch einen entsprechenden Befehl von der Steuereinrichtung 316 ein Schaltstellantrieb, beispielsweise der Schaltantrieb 414a, im Sinne eines Einlegens des ersten Gangs oder des Rückwärtsgangs betätigt, so wird entweder unmittelbar der Gang eingelegt, sofern die Mitnahmeformationen des betreffenden Abtriebsrads und die zugeordneten Mitnahmeformationen der betreffenden Schalt- und Synchronisiervorrichtung in gegenseitigen Eingriff treten (also, wenn beispielsweise die Zähne der einen Verzahnung auf die Zahnzwischenräume der anderen Verzahnung treffen), oder der Gang wird nicht eingelegt, wenn die sogenannten Mitnahmeformationen nicht in gegenseitigen Eingriff treten können.

Ist ein derartiger Eingriff nicht möglich (etwa weil die Zähne der einen Verzahnung auf die Zähne der anderen Verzahnung treffen), so wird der als Kraftspeicher dienende Federspeicher 430 gespannt. Wird nun der Anlasser bei geöffneten Kupplungen betätigt, so wird unter der Voraussetzung tiefer Temperaturen, also des Auftretens von Losbrech- oder/und Schleppmomenten in den Kupplungsanordnungen, den kupplungs- bzw. motorseitigen Zahnrädern eine Drehbewegung erteilt, weil der Antriebsstrang auf Grund der Losbrech- bzw. Schleppmomente trotz geöffneter Kupplungsanordnungen nicht vollständig vom Motor getrennt ist. Die Zahnräder auf der Getriebeabtriebsseite stehen hingegen, da eine Parksperre eingelegt ist oder/und das Fahrzeug bei entriegelter Parksperre steht. Es kommt damit zu einer Relativ-Drehbewegung zwischen den Abtriebsrädern einerseits und den zugeordneten Schalt- und Synchronisiervorrichtungen, die diese in eine relative Drehstellung bringt, in der die Mitnahmeformationen in gegenseitigen Eingriff treten (etwa weil die Zähne der einen Verzahnung auf die Zahnzwischenräume der anderen Verzahnung treffen). Damit ist ein Einlegen eines Gangs im Falle eines mit ausgelegten Gängen abgestellten Kraftfahrzeugs auch bei tiefen Temperaturen möglich.

Alternativ oder zusätzlich können die Schaltstellantriebe auch dafür ausgebildet sein, für kurze Zeiträume gegenüber normalen Stellkräften vergößerte Stellkräfte aufzubringen, die im Dauerbetrieb die Schalt- und Synchronisiervorrichtungen übermäßig belasten würden, aber für spezielle Situationen (wie etwa eine hohe Viskosität des den Lamellen-Kupplungsanordnungen zugeordneten Kühlöls auf Grund niedriger Temperatur) vorteilhaft ein Gangeinlegen bzw. Gangwechseln ermöglichen. Eine gewisse Reduzierung der Lebensdauer der Schalt- und Synchroniservorrichtungen könnte man notfalls in Kauf nehmen, da derartige Situationen in der Regel nur selten vorkommen werden. Überdies kann die Steuereinrichtung 316 dafür ausgelegt sein, die überhöhten Betätigungskräfte nur für kurze Zeitintervalle und unter bestimmten Bedingungen einzustellen, so dass in der Praxis keine nennenswerte Verkürzung der Lebensdauer der Schalt- und Synchronisiervorrichtungen eintreten wird.

Die Steuereinrichtung 316 kann auch einen Betätigungsmodus aufweisen, in dem beim Schalten von einem Ausgangsgang zu einem Zielgang die dem Zielgang zugeordnete Getriebeeingangswelle nicht nur durch die dem Zielgang zugeordnete Schalt- und Synchronisiervorrichtung, sondern auch durch eine andere Schalt- und Synchronisiervorrichtung, die an sich dafür vorgesehen ist, beim Schalten zu einem der gleichen Getriebeeingangswelle zugeordneten, vom Zielgang verschiedenen Gang tätig zu werden. Beispielsweise könnte zur Vorbereitung und beim Einlegen des ersten Gangs G1 nicht nur die Schalt- und Synchronisiervorrichtung 412a sondern zusätzlich auch die Schalt- und Synchronisiervorrichtung 412c betätigt werden, damit diese Vorrichtungen gemeinsam die Getriebeingangswelle 408 einer Drehzahl zumindest anzunähern, die der momentanen Fahrzeuggeschwindigkeit unter Berücksichtigung der Getriebübersetzung im Zielgang (im Beispielsfall der erste Gang) entspricht. Umgekehrt kann zum Einlegen des dritten Gangs G3 oder des fünften Gangs G5 neben der Schalt- und Synchronisiervorrichtung 412c zusätzlich die Schalt- und Synchronisiervorrichtung 412a in diesem Sinne betätigt wird. Entsprechendes gilt für die der Getriebeeingansgwelle 406 zugeordneten Gänge G2, G4 und G6. Es können jeweils zwei Schalt- und Synchronisiervorrichtungen (412b und 412d) bzw. (412a und 412c) in diesem Sinne gleichzeitig betätigt werden.

Es ist allerdings Sorge zu tragen, dass nicht versehentlich der falsche Gang eingelegt wird. Dies kann beispielsweise dadurch vermieden werden, dass die Steuereinrichtung 316 die Drehzahl der betreffenden Getriebeeingangswelle und der Getriebeausgangswelle 420 (oder/und der Abtriebswelle der Antriebseinheit) unter Berücksichtigung der Getriebeübersetzungen, insbesondere der Getriebeübersetzung des nicht einzulegenden Gangs, miteinander vergleicht und vor Erreichen des Synchronpunktes des nicht einzulegenden Gangs die auf die diesem nicht einzulegenden Gang zugeordnete Schalt- und Synchronsiervorrichtung wirkende Betätigungskräfte aufhebt oder zumindest hinreichend reduziert.

Durch die an der dem nicht einzulegenden Gang zugeordneten Schalt- und Synchronisiervorrichtung auftretende Reibarbeit kann auch bei tiefen Temperaturen trotz in der Kupplungseinrichtung 202 auftretenden Schleppmomenten ein Gang eingelegt werden bzw. von einem Ausgangsgang zu einem Zielgang geschaltet werden.

Die Steuereinrichtung 316 ist vorteilhaft dafür ausgelegt, über die Schaltstellantriebe gleichzeitig wenigstens zwei Gänge einzulegen. Es wird insbesondere daran gedacht, dass eine Parksperre dadurch realisiert ist, dass auf der gleichen Getriebeeingangswelle zwei Getriebegänge eingelegt werden.

Vorteilhaft können aber auch wenigstens ein Gang auf der einen Getriebeingangswelle und wenigstens ein Gang auf der anderen Getriebeeingangswelle eingelegt werden, wobei vorzugsweise wenigstens ein Vorwärtsgang und der Rückwärtsgang zu den eingelegten Gängen gehören. Diese Gänge werden vorzugsweise vollautomatisch durch die Steuereinrichtung eingelegt, wenn das Kraftfahrzeug abgestellt wird. Soll dann wieder losgefahren werden, so könnte es sein, dass auf Grund zu niedriger Außentemperaturen große Schleppmomente in der Kupplungseinrichtung auftreten, so dass kein Gang mehr eingelegt werden kann (es sei denn, dass die obigen Vorschläge realisiert sind). Sind hingegen, wie hier vorgeschlagen, der Rückwärtsgang auf der einen Getriebeeingangswelle und wenigstens ein Vorwärtsgang auf der anderen Getriebeeingangswelle eingelegt, so kann durch Einkuppeln der einen und Ausgekuppelthalten bzw. Auskuppeln der anderen Kupplungsanordnung entweder der Vorwärtsgang oder der Rückwärtsgang zum Anfahren aktiviert werden. Für viele Situationen wird es auch ausreichen, wenn nur ein Gang, etwa der Vorwärtsgang, eingelegt wird, vorzugsweise automatisch durch die Steuereinrichtung 316.

Abgesehen von dem Aspekt der Parksperre macht es durchaus auch in anderer Hinsicht Sinn, auf wenigstens einer der Getriebeeingangswellen, vorzugsweise auf beiden Getriebeeingangswellen, mehrere Gänge einzulegen, wenn das Kraftfahrzeug abgestellt wird. Dies ermöglicht nämlich zum Anfahren eine Auswahl aus mehreren Gängen. Es sind dann alle nicht benötigten Gänge auszulegen, beispielsweise alle Vorwärtsgänge bis auf einen Anfahrgang und den Rückwärtsgang.

Um beim Anlassen des Motors eine unkontrollierte Bewegung des Kraftfahrzeugs auf Grund wenigstens eines eingelegten Gangs und der bei tiefen Temperaturen auftretenden Schleppmomente bzw. Losreismomente in der Kupplungseinrichtung zu vermeiden, ist vorzugsweise eine Sicherheitsfunktionalität der Steuereinrichtung 316 vorgesehen. Die Steuereinrichtung 316 kann beispielsweise ein Starten des Motors nur dann zulassen, wenn gleichzeitig die Fußbremse 450 (vgl. Fig. 1 b) betätigt wird. Das Starten oder nicht Starten kann auch von der momentanen Stellung des Schalthebels 452 abhängig gemacht werden, beispielsweise ein Starten nur im Parkmodus P erlaubt werden.

Ferner ist es aus Sicherheitsgründen vorteilhaft, wenn die Sicherheitsfunktionalität die Aufhebung des Parkmodus, in dem beispielsweise zwingend eine Parksperre aktiviert ist, und den Wechsel in den Rückwärtsfahrmodus R bzw. den Vorwärtsfahrmodus D trotz entsprechender Betätigung des Schalthebels 452 nur dann zulässt, wenn gleichzeitig die Fußbremse 450 betätigt wird. Hierdurch wird verhindert, dass es zu einer unkontrollierten Bewegung des Kraftfahrzeugs kommt, wenn die Parksperre ausgelegt bzw., im Falle von noch nicht eingelegten Gängen, ein Vorwärts-Anfahrgang oder der Rückwärtsgang eingelegt wird. Eine andere Möglichkeit ist, dass das Aufheben des Parkmodus bzw. - im Falle von noch nicht eingelegten Gängen - das Einlegen eines Gangs mit einer Betätigung des Fahrzeug-Bremssystems 454 zwangsgekoppelt ist. Trotz nicht betätigtem Bremspedal wird dann automatisch dafür gesorgt, dass die Fahrzeugbremsen betätigt werden, um eine unkontrollierte Bewegung des Fahrzeugs zu vermeiden.

Man kann vorsehen, dass auf Grundlage der in der Kupplungseinrichtung auftretenden Schleppmomente eine Fahrzeug-Kriechfunktion bereitsgestellt wird. Hierzu kann die Steuereinrichtung 316 eine entsprechende Kriech-Funktionalität aufweisen.

Vorzugsweise ist eine Kompensation der auf die Fahrzeugräder wirkenden Kupplungs-Schleppmomente zu Null oder einem Kriechwert oder einem Berghaltewert (im Fall einer Fahrzeug-Berghaltefunktion) vorgesehen, und zwar beispielsweise vermittels des Fahrzeug-Bremssystems oder/und vermittels einer aufeinander abgestimmten Betätigung der beiden Kupplungsanordnungen in dem Falle, dass auf der der einen Kupplungsanordnung zugeordneten Getriebeeingangswelle ein Vorwärtsgang und auf der der anderen Kupplungsanordnung zugeordneten Getriebeeingangswelle der Rückwärtsgang eingelegt ist. Allgemein gesprochen, kann mittels des Fahrzeug-Bremssystems oder durch entsprechende Betätigung wenigstens einer der Kupplungsanordnungen ein an den Fahrzeugrädern wirksames Antriebsmoment auf Grund von Kupplungs-Schleppmomenten oder/und Kupplungs-Lamellenhaftmomenten zu Null oder einem Sollwert kompensiert werden, indem die Steuereinheit 316 das Fahrzeugbremssystem 454 oder/und die Kupplungseinrichtung 202 bzw. die betreffende Kupplungsanordnung entsprechend ansteuert.

Es wird im Folgenden noch einmal auf den Zustand Bezug genommen, bei dem gleichzeitig ein Vorwärtsgang und gleichzeitig ein Rückwärtsgang eingelegt sind. Vorzugsweise können diese Gänge beim Anfahren und beim anschließenden Fahren des Kraftfahrzeugs eingelegt bleiben, und es kann durch gegenläufige Betätigung der beiden Kupplungsanordnungen zwischen dem Vorwärtsgang und dem Rückwärtsgang gewechselt werden, ohne dass es einer Betätigung des Getriebes bedarf. So lange der Rückwärtsgang eingelegt ist, sollte durch eine Sicherheitsfunktionalität der Steuereinrichtung 316 dafür gesorgt werden, dass eine maximale Fahrzeuggeschwindigkeit nicht überschritten wird. Man kann aber auch ein automatisches Auslegen des Rückwärtsgangs für den Fall vorsehen, dass die Fahrzeuggeschwindigkeit einen Schwellenwert übersteigt.

Die Steuereinrichtung 316 kann vorteilhaft einen Aktiv-Synchronsiermodus aufweisen, in dem durch entsprechende Ansteuerung des Motors (allgemein der Antriebseinheit) oder/und durch entsprechende Betätigung der Kupplungsanordnungen die Drehzahl der dem Zielgang zugeordneten Getriebeeingangswelle dem Synchronverhältnis des Zielgangs zumindest angenähert, vorzugsweise die Drehzahl dieser Getriebeeingangswelle auf das Synchronverhältnis des Zielgangs gebracht wird, um dann das Einlegen des Zielgangs zu erleichtern bzw. zu ermöglichen. Die Schalt- und Synchronisiervorrichtungen werden dann entsprechend geschont, und es bedarf nicht unbedingt des Einsatzes von mehreren Schaft- und Synchronisiervorrichtungen gleichzeitig, und es kann auch auf das Einlegen eines Ganges unter Ausnutzung einer Vorspannung der Betätigungsverbindung zwischen der betreffenden Schalt- und Synchronisiervorrichtung und dem zugeordneten Schaltstellantrieb verzichtet werden. Eine Zugkraftunterbrechung während des Schaltens ist bei diesem Aktiv-Synchronsiermodus in Kauf zu nehmen.

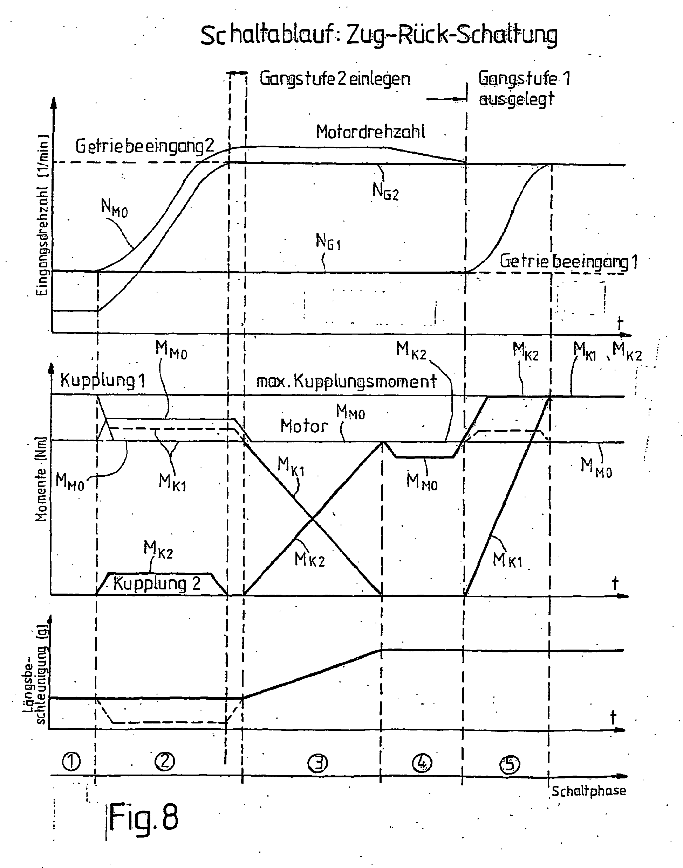

Fig. 8 zeigt ein Beispiel für einen Schaltablauf bei einer Zug-Rückschaltung, der ein zugkaftunterbrechungsfreies Rück-Schalten ermöglicht, ohne dass an den Schaft- und Synchronsiervorrichtungen zur Synchronisierung der dem Zielgang zugeordneten Getriebeeingangswelle übermäßige Reibarbeit geleistet werden muss, selbst bei großen Schleppmomenten in der Kupplunsgeinrichtung.

Der Fig. 8 liegen die folgenden Annahmen und die folgende Nomenklatur zu Grunde:

Es wird auf Getriebeeingangswellen 1 und 2, Kupplungen 1 und 2 und Gänge 1 und 2 Bezug genommen. Die Getriebeeingangswelle 1 kann die Getriebeeingangswelle 406 und die Getriebeeingangswelle 2 kann die Getriebeeingangswelle 408 sein, oder umgekehrt. Dementsprechend kann die Kupplung 1 der Kupplungsanordnung 204 und die Kupplung 2 der Kupplungsanordnung 206 entsprechen, oder umgekehrt. Gang 1 ist ein der Getriebeeingangswelle 1 zugeordneter Gang (der Ausgangsgang) und Gang 2 ist ein der Getriebeeingangswelle 2 zugeordneter Gang (der Zielgang). Es wird in einem Zug-Betriebszustand von einem größeren, der Getriebeeingangswelle 1 zugeordneten Gang 1 zu einem kleineren, der Getriebeeingangswelle 2 zugeordneten Gang 2 geschaltet.

Bei der Schaltungsart Zug-Rück liefert der Motor ein positives Moment an das Getriebe. Dieses Moment wird über die Getriebeeingangswelle 1 übertragen. Die Kupplung 1 ist mit der Getriebeeingangswelle 1 verbunden, die Kupplung 2 ist mit der Getriebeeingangswelle 2 verbunden. Im Ausgangszustand ist die Kupplung 1 vollständig geschlossen und befindet sich somit in Überanpressung. Die Kupplung 2 ist beim gezeigten Beispiel im Ausgangszustand offen. Die Getriebeeingangswelle 1 dreht sich damit im Ausgangszustand mit der Motordrehzahl. Auf der Getriebeeingangswelle 1 ist ein Gang eingelegt, so dass Kraftfluss zwischen der Getriebeeingangswelle 1 und der Getriebeausgangswelle hergestellt ist.

Ein bevorzugter, fünf Schaltphasen umfassender Schaltablauf ist in Fig. 8 schematisch dargestellt. Die Phasen sind in Fig. 8 durch arabische Ziffern 1 bis 5 in Kreisen bezeichnet und werden im Folgenden als Phasen I bis V angesprochen. Mögliche Varianten und Ausgestaltungen der Schaltphasen sind in der Fig. gestrichelt dargestellt. Zur Unterscheidung der verschiedenen Kurven und Kurvenabschnitte sind diese mit den Kennungen N_{Mo} für die Motordrehzahl, N_{G1} für die Drehzahl der Getriebeeingangswelle 1, N_{G2} für die Drehzahl der Getriebeeingangswelle 2, M_{Mo} für das Motormoment, M_{K1} für das Moment der Kupplung 1 und M_{K2} für das Moment der Kupplung 2 versehen. Ein sich aus der positiven Längsbeschleunigung (vgl. unterstes Teildiagramm) des Kraftfahrzeugs ergebender, die Änderung der Fahrzeuggeschwindigkeit repräsentierender zusätzlicher Beitrag zu den Änderungen der Drehzahlen ist in dem Teildiagramm für die Drehzahlen nicht berücksichtigt. Ferner wurde der Einfachheit halber von einem an sich (ohne aktiven Eingriff in die Motorsteuerung) über der Motordrehzahl konstant bleibenden Motormoment ausgegangen. Der Schaltvorgang gerechnet vom Beginn der Schaltphase I bis zum Ende der Schaltphase V könnte beispielsweise etwa 0,5s bis 1 s dauern.

Wäre in Abweichung von den oben gemachten Annahmen und der Darstellung im Diagramm in Fig. 8 die Kupplungsanordnung 2 zu Beginn ebenfalls vollständig geschlossen, so könnte diese zur Einleitung des Schaltvorgangs in Phase I vollständig geöffnet werden.

In Phase II wird das Kupplungsmoment der Kupplung 1, M_{K1}, auf das in Phase I gültige Moment des Motors abgesenkt. Das Antriebsmoment des Motors wird vergrößert und die Kupplung 2 wird leicht eingerückt, so dass nun das Motormoment größer als das Moment der Kupplung 1 ist, so dass Kupplungsschlupf auftritt und die Motordrehzahl ansteigt, bis gegen Ende der Phase II eine Drehzahl über der Synchrondrehzahl des Zielgangs 2 erreicht wird. Durch das leichte Einkuppeln der Kupplung 2 wird die Getriebeeingangswelle 2 hoch beschleunigt, so dass sich deren Drehzahl der Synchrondrehzahl des Zielgangs annähert. Am Ende der Phase II wird der Zielgang (Gang 2) eingelegt, so dass unter Mitwirkung der dem Zielgang zugeordneten Synchronsiervorrichtung des Getriebes die Getriebeeingangswelle 2 die Synchrondrehzahl des Zielgangs erreicht und es damit zum Einlegen des Zielgangs kommt.

In Phase III wird nach Erreichen der gewählten Motordrehzahl über der Drehzahl der Getriebeeingangswelle 2 das Motormoment wieder auf das ursprüngliche Moment abgesenkt, um ein weiteres Ansteigen der Motordrehzahl zu verhindern. Die Kupplung 1 befindet sich im Schlupf und eine gewählte Schlupfdrehzahl zwischen der Getriebeeingangswelle 1 und der Motordrehzahl wird vermittels der Kupplung 1 eingeregelt. Die Kupplung 2 wird gesteuert geschlossen. Dadurch wird ein geregeltes Öffnen der Kupplung 1 ausgelöst, da die vorher gewählte Schlupfdrehzahl nur konstant gehalten werden kann, wenn die Summe der Momente, die von den beiden Kupplungen auf die Getriebeeingangswellen und damit - unter Vermittlung des Getriebes - auf die Getriebeausgangswelle übertragen wird, konstant gleich dem gewählten Motormoment ist. Die Kupplung 2 übernimmt immer mehr Motormoment, bis die Kupplung 1 vollständig geöffnet ist. Die Kupplung 2 kann jetzt das komplette Motormoment übertragen und wird nicht weiter geschlossen. An Stelle eines gesteuerten Schließens der Kupplung 2 und eines geregelten Öffnens der Kupplung 1 könnte man auch ein gesteuertes Öffnen der Kupplung 1 und ein geregeltes Schließen der Kupplung 2 vorsehen.

In Phase IV wird durch ein Absenken des Motormoments unter das Kupplungsmoment die Motordrehzahl auf die Drehzahl der Getriebeeingangswelle 2 heruntergezogen. In Phase V wird dann die Kupplung II vollständig geschlossen. Die Kupplung 1 kann ebenfalls geschlossen werden, was zum Ansteigen der Drehzahl N_{G1} der Getriebeeingangswelle 1 auf das Niveau der Getriebeeingangswelle 2 führt. Das Motormoment wurde beim Schaltablauf gemäß Diagramm schon am Ende der Phase IV auf den ursprünglichen Wert zurückgeführt.

In Phase II ist noch eine Variante gezeigt, nach der das Moment der Kupplung 1 nicht ganz auf den Wert des anfänglichen Motormoments reduziert wird, um einen unerwünschten negativen Zwischenbeschleunigungsvorgang des Fahrzeugs auf Grund der Beschleunigung der Getriebeeingangswelle 2 zu vermeiden. Ferner kann man in Phase V das Motormoment auf einen Wert über den ursprünglichen Wert erhöhen, um die für die Beschleunigung der Getriebeeingangswelle 1 benötigte Beschleunigungsenergie zu kompensieren.

Man kann erreichen, dass der gesamte Beschleunigungsverlauf während des Kuppelvorgangs monoton ohne Zwischenverzögerungs- oder Zwischenbeschleunigungsvorgänge verläuft, indem zu jeder Zeit das anfängliche Motormoment vermittels der Getriebeeingangswellen ins Getriebe eingeleitet und entsprechend den Getriebeübersetzungen im Ausgangs- und Zielgang zur Getriebeausgangswelle übertragen wird. An der Getriebeausgangswelle wird demenstprechend zu jeder Zeit ein im Wesentlichen konstant bleibendes (Phasen I, II, IV, V) bzw. monoton (vorzugsweise streng monoton, z.B. linear) steigendes (Phase III) Antriebsmoment.

Gemäß einem Schaltablauf, wie in Fig. 8 beispielhaft vorgeschlagen, ist selbst bei tiefen Temperaturen bzw. zähflüssigem Kühlöl ein Rückschalten ohne nennenswerte Belastung der Synchronisiervorrichtungen möglich, ohne dass auf das Lastschalten ohne Zugkraftunterbrechung verzichten zu müssen.

Beim Hochschalten liegt das dem Zielgang zugeordneten Getriebeeingangswellen-Synchrondrehzahlniveau unter dem des alten Gangs. Ist die dem Zielgang zugeordnete Kupplung offen, so kann vermittels einer gesonderten Abbremseinrichtung oder/und auf Grund von Schleppmomenten des Getriebes die Drehzahl der dem Zielgang zugeordneten Getriebeeingangswelle zwischen Null und der neuen Synchrondrehzahl liegen. Man kann dann durch Schließen der dem Zielgang zugeordneten Kupplung die dem Zielgang zugeordnete Getriebeeingangswelle auf die neue Synchrondrehzahl bringen, um ein Gangeinlegen zu ermöglichen bzw. zu erleichtern. Auf das Lastschalten ohne Zugkraftunterbrechung braucht dabei nicht verzichtet werden.

Die vorstehenden, auf die Beherrschung der Probleme im Zusammenhang mit Schleppmomenten in der Kupplungseinrichtung bei tiefen Temperaturen zielenden Maßnahmen sind bei normalen Betriebsbedingungen nicht unbedingt mehr erforderlich. Es kann deshalb vorgesehen sein, dass die Steuereinrichtung 316 selbsttätig einen normalen Schalt- und Kupplungsbetrieb mit freier Gangwahl freigibt. Hierzu kann die Steuereinrichtung von einem beispielsweise die Temperatur des Kühlöls messenden Temperatursensor ein Temperatursignal erhalten und dieses mit einem Schwellenwert vergleichen. Ggf. kann aus der gemessenen Temperatur die Viskosität des Kühlöls bestimmt werden und diese mit einem vorgegebenen Schwellenwert verglichen werden. Die Steuereinrichtung kann auch dafür vorgesehen sein, aus anderen Messwerten, ggf. Temperaturwerten, auf die für die Schleppmomente maßgebliche Temperatur zu schließen, beispielsweise unter Zugrundelegung eines Temperaturmodels.

Zur aktiven Reduktion der Schleppmomente kann die Steuereinrichtung 316 eine Funktionalität aufweisen, die dazu dient, die Pumpe 209 (vgl. Fig. 2) so anzusteuern, dass nur so viel Kühlöl den Kupplungsanordnungen zugeführt wird, wie momentan erforderlich ist, etwa im Hinblick auf eine in der Kupplungseinrichtung auftretende Verlustleistung oder/und im Hinblick auf einen Schmierbedarf an den Lamellen. Ggf. kann der Kühlölfluss zu den Kupplungsanordnungen auch vollständig unterbrochen werden, wenn momentan kein Zufuhrbedarf besteht.

Man kann auch vorsehen, dass die Steuereinrichtung dafür ausgelegt ist, ein Starten des Motors nur dann freizugeben, wenn die Viskosität des Kühlöls einen maximalen Wert nicht überschreitet bzw. die Temperatur des Kühlöls nicht unter einem kritischen Wert liegt. Diese Maßnahme ist insbesondere im Zusammenhang mit hier angesprochenen Maßnahmen von Interesse, die eine Erwärmung des Kühlöls unabhängig vom Laufen des Motors ermöglichen (vgl. Heizungen 322, 324 und der Umwälzmodus im Zusammenhang mit dem Ventil 232). Man kann auch vorsehen, dass das Abstellen des Kraftfahrzeugs so vorbereitet wird, dass bei der Wiederinbetriebnahme des Kraftfahrzeugs die in der Kupplungseinrichtung auftretenden Schleppmomente und Losbrechmomente minimiert und im Idealfall sogar weitgehend vermieden werden. So kann die Steuereinrichtung dafür ausgebildet sein, ein bevorstehendes Abstellen des Kraftfahrzeugs bzw. ein Abstellen desselben zu erkennen (die Steuereinrichtung kann hierzu beispielsweise auf eine Verstellung des Schalthebels 452 in die Stellung P ansprechen), und in Reaktion hierauf beim Abstellen nach Ausrücken der Kupplungsanordnungen für eine gewisse Zeit einen überhöhten Kühlöldruck bzw. einen überhöhten Kühlölfluss zu den Kupplungsanordnungen einzustellen, um die Lamellen der Kupplungsanordnungen auseinander zu drücken, die Außenlamellen und die Innenlamellen also voneinander zu trennen. Dies erfolgt vorzugsweise völlig automatisch durch entsprechende Ansteuerung der Pumpe 209 durch die Steuereinrichtung 316. Alternativ oder zusätzlich hierzu kann in Reaktion auf das Erkennen eines bevorstehenden Abstellens des Kraftfahrzeugs bzw. des Abstellens selbst nach Ausrücken der Kupplungsanordnungen die Antriebseinheit durch die Steuereinrichtung 316 derart angesteuert werden, dass die Antriebseinheit für eine gewisse Zeit bei einer gegenüber der Leerlaufdrehzahl deutlich erhöhten Drehzahl läuft, so dass durch Fliehkraftwirkung das Kühlöl aus den Lamellenpaketen nach radial außen weggeschleudert wird. Hierzu wird vorzugsweise zuvor der Kühlölfluss zu den Lamellenpaketen unterbrochen.

Der Betrieb der Antriebseinheit bei ausgerückten Kupplungsanordnungen mit einer gegenüber der Leerlaufdrehzahl deutlich erhöhten Drehzahl ist auch zur Vorbereitung eines Einlegens wenigstens eines Getriebegangs vorteilhaft, da die Schleppmomente um so kleiner sein werden, je weniger Kühlöl sich zwischen den Lamellen befindet. Die Steuereinrichtung 316 ist vorzugsweise deshalb auch dafür ausgelegt, das Einlegen eines Ganges bzw. den Wunsch, dass ein Gang eingelegt werden soll, zu erkennen und die Antriebseinheit bei ausgerückten Kupplungsanordnungen entsprechend anzusteuern. Beispielsweise kann die Steuereinrichtung 316 auf ein Verstellen des Schalthebels 452 in die Stellung R bzw. D ansprechen und erst nach dem vorgeschlagenen Hochdrehen der Antriebseinheit den betreffenden Gang tatsächlich einzulegen.

Es hat sich gezeigt, dass auch durch die Betätigung der Kupplungsanordnungen selbst ein Lösen von aneinander klebenden Lamellen erreicht werden kann bzw. dieses Lösen zumindest unterstützt werden kann. Dieser nützliche Effekt ist auf im Zuge der Kupplungsbetätigung auftretende mechanische Verspannung der Kupplungsanordnungen und die Verschiebung der Lamellen bei der Betätigung zurückzuführen. Die Steuereinrichtung 316 ist vorzugsweise dafür ausgelegt, auf den Gangeinlegewunsch bzw. das Einlegen des Ganges anzusprechen und vor dem Einlegen des Ganges bzw. vor Abschluss des Einlegevorgangs die Kupplungsanordnungen wenigstens einmal, vorzugsweise mehrmals aufeinander folgend im Ein- und Ausrücksinn zu betätigen, um den angesprochenen hilfreichen Effekt zu erzielen.

Es hat sich ferner gezeigt, dass auch auf die Kupplungseinrichtung wirkende Drehzahlungleichförmigkeiten, wie etwa Drehschwingungen, ein Lösen von aneinander anhaftenden Lamellen bewirken oder zumindest unterstützen. Die Steuereinrichtung 316 ist deshalb vorzugsweise dafür ausgelegt, die Antriebseinheit, insbesondere die Brennkraftmaschine, derart anzusteuern, dass bei laufender Antriebseinheit derartige Drehzahlungleichförmigkeiten auftreten. Beispielsweise können bei einem Verbrennungsmotor Zylinder abgeschaltet oder Zylinder abwechselnd oder uneinheitlich mit Kraftstoff versorgt werden.

Es werden unter anderem Maßnahmen zur Beherrschung bzw. Verringerung von in einer Lamellen-Mehrfach-Kupplungseinrichtung auftretenden Schleppmomenten auf Grund temperaturbedingter erhöhter Viskosität bzw. Zähigkeit einer den Lamellen in Betrieb zugeführten Betriebsflüssigkeit vorgeschlagen, um eine Inbetriebnahme eines Kraftfahrzeugs bzw. den Betrieb des Kraftfahrzeugs auch bei tiefen Temperaturen zu ermöglichen.

## Patentansprüche

1. Kraftfahrzeug, umfassend einen Antriebsstrang, der aufweist: eine Antriebseinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit unter Vermittlung einer Pumpenanordnung (209) zuführbar ist,
**dadurch gekennzeichnet,**
**dass** die Pumpenanordnung (209) oder eine Flusseinstelleinrichtung durch eine Steuereinrichtung (316) ansteuerbar ist, um einen momentanen Betriebsflüssigkeitsfluss zu den Lamellen-Kupplungsanordnungen (204, 206) einzustellen, und dass die Steuereinrichtung (316) dafür ausgelegt ist, in Abhängigkeit von einem momentanen Zufuhrbedarf an Betriebsmedium zu wenigstens einer der Kupplungsanordnungen den Betriebsflüssigkeitsfluss zu vergrößern und zu verkleinern, derart, dass die Steuereinrichtung (316) bei geringerem Zufuhrbedarf den Betriebsflüssigkeitsfluss verkleinert oder unterbricht und bei größerem Zufuhrbedarf den Betriebsflüssigkeitsflussvergrößert, wobei die elektronische Steuereinheit auf Grundlage eines Temperatursignals, welches von einem die Temperatur des Kühlöls erfassenden Sensors stammt, das auf die Zeiteinheit bezogene Fördervolumen der Pumpenanordnung (209) oder/und einen durchgelassenen Volumenstrom eines im Kreislauf angeordneten Volumenstrom-Einstellventils steuert oder regelt.

2. Kraftfahrzeug nach Anspruch 1, **dadurch gekennzeichnet, dass** die Steuereinrichtung (316) den Zufuhrbedarf im Hinblick auf eine an der Kupplungsanordnung auftretende Verlustleistung und auf einen Schmierbedarf an den Lamellen der Kupplungsanordnung bestimmt.

3. Kraftfahrzeug, umfassend einen Antriebsstrang, der aufweist: eine Antriebseinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit unter Vermittlung einer Pumpenanordnung (209) zuführbar ist,
**dadurch gekennzeichnet,**
**dass** die Pumpenanordnung (209) oder die Flusseinstelleinrichtung oder/und eine einer hydraulischen Betätigungseinrichtung (234) für die Kupplungsanordnungen zugeordnete Pumpenanordnung (208) in einem Umlaufmodus betreibbar sind, in dem durch Umwälzen von Betriebsflüssigkeit unabhängig von einem Zufuhrbedarf an Betriebsmedium zu den Kupplungsanordnungen bzw. unabhängig von der Betätigung der Kupplungseinrichtung Wärmeenergie in das Betriebsmedium eingetragen wird, wobei ein Bypass freischaltbar ist (230, 232), um das Betriebsmedium an den Kupplungsanordnungen vorbei umwälzen zu können und wobei eine Steuereinrichtung (316) dafür ausgelegt ist, auf ein ein bevorstehendes Starten des Kraftfahrzeugs indizierendes Ereignis anzusprechen und in Reaktion auf das indizierte Ereignis den Umwälzbetrieb einzuleiten.

4. Kraftfahrzeug nach Anspruch 3, **dadurch gekennzeichnet, dass** die Steuereinrichtung (316) den Umwälzbetrieb einleitet, wenn der Fahrer per Fernbedienung das Fahrzeug öffnet oder/und wenn die Fahrertür geöffnet wird.

5. Kraftfahrzeugs nach einem der Ansprüche 3 oder 4, **dadurch gekennzeichnet, dass** eine/die Steuereinrichtung (316) dafür ausgelegt ist, den Umwälzbetrieb automatisch dann einzuleiten, wenn wenigstens eine Positiv-Bedingung erfüllt oder/und wenigstens eine Negativ-Bedingung nicht erfüllt ist.

6. Kraftfahrzeug nach einem der Ansprüche 3 bis 5, **dadurch gekennzeichnet, dass** eine/die Steuereinrichtung (316) dafür ausgelegt ist, den Umwälzbetrieb automatische zu beenden, wenn wenigstens eine Positiv-Bedingung erfüllt oder/und wenigstens eine Negativ-Bedingung nicht erfüllt ist.

7. Kraftfahrzeug nach einem der vorhergehenden Ansprüche, **dadurch gekennzeichnet, dass** eine/die Steuereinrichtung (316) dafür ausgelegt ist, ein Starten der Antriebseinheit in Abhängigkeit von einem momentanen Viskositätszustand des Betriebsmediums freizugegen und zu sperren.

8. Kraftfahrzeug nach einem der vorhergehenden Ansprüche, **dadurch gekennzeichnet, dass** eine/die Steuereinrichtung (316) dafür ausgelegt ist, vermittels einer vorzugsweise hydraulischen Betätigungseinrichtung (234) die Kupplungsanordnungen (204, 206) zu betätigen und in einem Warmlaufmodus wenigstens eine, vorzugsweise beide Kupplungsanordnung mit Schlupf zu betreiben.

9. Kraftfahrzeug nach Anspruch 8, **dadurch gekennzeichnet, dass** die Steuereinrichtung (316) dafür angelegt ist, die wenigstens eine Kupplungsanordnung mit Schlupf bei stehendem Fahrzeug gegen eine Abbremswirkung einer Bremseinrichtung (454) arbeiten zu lassen oder/und die wenigstens eine Kupplungsanordnung bei fahrendem Fahrzeug mit Schlupf zu betreiben.

10. Kraftfahrzeug nach einem der vorhergehenden Ansprüche, **dadurch gekennzeichnet, dass** eine Pumpenanordnung (209) oder Flusseinstelleinrichtung durch eine/die Steuereinrichtung (316) ansteuerbar ist, um einen momentanen Betriebsflüssigkeitsfluss zu den Lamellen-Kupplungsanordnungen einzustellen, und dass die Steuereinrichtung (316) dafür ausgelegt ist, zum Vorbereiten des Abstellens des Kraftfahrzeugs oder beim Abstellen des Kraftfahrzeugs bei ausgerückten Kupplungsanordnungen (204, 206) für ein vorgegebenes Zeitintervall einen überhöhten Betriebsflüssigkeitsfluss einzustellen, um die Lamellen der Kupplungsanordnungen vermittels des Betriebsflüssigkeitsflusses auseinander zu drücken.

11. Kraftfahrzeug, umfassend einen Antriebsstrang, der aufweist: eine Antriebeinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit unter Vermittlung einer Pumpenanordnung (209) zuführbar ist, **dadurch gekennzeichnet,**
**dass** die Pumpenanordnung (209) oder Flusseinstellanordnung durch eine Steuereinrichtung (316) ansteuerbar ist, um einen momentanen Betriebsflüssigkeitsfluss zu den Lamellen-Kupplungsanordnungen (204, 206) einzustellen, und dass die Steuereinrichtung (316) dafür ausgelegt ist, ein bevorstehendes Abstellen des Kraftfahrzeugs oder ein Abstellen des Kraftfahrzeugs zu erkennen und in Vorbereitung des Abstellens oder beim Abstellen bei ausgerückten Kupplungsanordnungen für ein vorgegebenes Zeitintervall einen überhöhten Betriebsflüssigkeitsfluss einzustellen, um die Lamellen der Kupplungsanordnungen vermittels des Betriebsflüssigkeitsflusses auseinander zu drücken.

12. Fahrzeug nach Anspruch 11, **dadurch gekennzeichnet, dass** die Steuereinrichtung (316) dafür ausgelegt ist, den überhöhten Betriebsflüssigkeitsfluss bedarfsweise dann einzustellen, wenn wenigstens eine Positiv-Bedingung erfüllt oder/und wenigstens eine Negativ-Bedingung nicht erfüllt ist

13. Fahrzeug nach einem der vorhergehenden Ansprüche, **dadurch gekennzeichnet, dass** eine/die Steuereinrichtung (316) dafür ausgelegt ist, zum Vorbereiten des Abstellens des Kraftfahrzeugs oder/und beim Abstellen des Kraftfahrzeugs für ein vorgegebenes Zeitintervall bei ausgerückten Kupplungsanordnungen (204, 206) die Antriebseinheit (238) bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

14. Kraftfahrzeug, umfassend einen Antriebsstrang, der aufweist: eine Antriebeinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe, wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit unter Vermittlung einer Pumpenanordnung (209) zuführbar ist, **dadurch gekennzeichnet, dass** eine der Antriebseinheit (238) zugeordnete Steuereinrichtung (316) dafür ausgelegt ist, ein bevorstehendes Abstellen des Kraftfahrzeugs oder ein Abstellen des Kraftfahrzeugs zu erkennen und in Vorbereitung des Abstellens oder/und beim Abstellen für ein vorgegebenes Zeitintervall bei ausgerückten Kupplungsanordnungen (204, 206) die Antriebseinheit (238) bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

15. Kraftfahrzeug nach Anspruch 14, **dadurch gekennzeichnet, dass** die Steuereinrichtung (316) dafür ausgelegt ist, erst die Zufuhr von Betriebsflüssigkeit zu den Kupplungsanordnungen (204, 206) zu unterbrechen und dann für das vorgegebene Zeitintervall die Antriebseinheit (238) bei der gegenüber der Leerlaufdrehzahl deutlich erhöhten Drehzahl zu betreiben.

16. Fahrzeug nach einem der Ansprüche 14 oder 15, **dadurch gekennzeichnet, dass** die Steuereinrichtung (316) dafür ausgelegt ist, die Antriebseinheit bedarfsweise dann mit der gegenüber der Leerlaufdrehzahl deutlich erhöhten Drehzahl zu betreiben, wenn wenigstens eine Positiv-Bedingung erfüllt oder/und wenigstens eine Negativ-Bedingung nicht erfüllt ist.

17. Fahrzeug nach einem der vorhergehenden Ansprüche, **dadurch gekennzeichnet, dass** eine/die Steuereinrichtung (316) dafür ausgelegt ist, zum Vorbereiten eines Einlegens wenigstens eines Getriebeganges oder/und beim Einlegen des wenigstens einen Getriebeganges für ein vorgegebenes Zeitintervall bei wenigstens einer ausgerückten Kupplungsanordnung oder/und höchstens einem eingelegten Getriebegang die Antriebseinheit bei (238) einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

18. Kraftfahrzeug, umfassend einen Antriebsstrang, der aufweist: eine Antriebeinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit unter Vermittlung einer Pumpenanordnung (209) zuführbar ist,
**dadurch gekennzeichnet,**
**dass** eine der Antriebseinheit (238) zugeordnete Steuereinrichtung (316) dafür ausgelegt ist, ein bevorstehendes Einlegen des wenigstens einen Getriebegangs oder ein Einlegen des wenigstens einen Getriebegangs zu erkennen und in Vorbereitung des Einlegens oder/und beim Einlegen für ein vorgegebenes Zeitintervall bei ausgerückten Kupplungsanordnungen die Antriebseinheit (238) bei einer gegenüber einer Leerlaufdrehzahl deutlich erhöhten Drehzahl zu betreiben, um durch Fliehkraftwirkung Betriebsflüssigkeit von den Lamellen der Kupplungsanordnungen zu entfernen.

19. Kraftfahrzeug nach Anspruch 18, **dadurch gekennzeichnet, dass** die Steuereinrichtung (316) dafür ausgelegt ist, erst die Zufuhr von Betriebsflüssigkeit zu den Kupplungsanordnungen zu unterbrechen und dann für das vorgegebene Zeitintervall die Antriebseinheit bei der gegenüber der Leerlaufdrehzahl deutlich erhöhten Drehzahl zu betreiben.

20. Fahrzeug nach einem der Ansprüche 18 oder 19, **dadurch gekennzeichnet, dass** die Steuereinrichtung (316) dafür ausgelegt ist, die Antriebseinheit (238) bedarfsweise dann mit der gegenüber der Leerlaufdrehzahl deutlich erhöhten Drehzahl zu betreiben, wenn wenigstens eine Positiv-Bedingung erfüllt oder/und wenigstens eine Negativ-Bedingung nicht erfüllt ist.

21. Fahrzeug nach einem der vorhergehenden Ansprüche, **dadurch gekennzeichnet, dass** eine/die Steuereinrichtung (316) dafür ausgelegt ist, zur Vorbereitung des Einlegens eines Getriebegangs bei stehender oder/und laufender Antriebseinheit vermittels einer vorzugsweise hydraulischen Betätigungseinrichtung (234) die Kupplungsanordnungen (204, 206) wenigstens einmal, vorzugsweise mehrmals aufeinanderfolgend im Ein- und Ausrücksinn zu betätigen, um durch mechanische Verspannung der Kupplungsanordnungen (204, 206) oder/und Verschiebung der Lamellen ein Lösen von Lamellen voneinander, die unter Vermittlung von Betriebsflüssigkeit aneinander haften, zu erreichen oder zumindest zu unterstützen.

22. Kraftfahrzeug, umfassend einen Antriebsstrang, der aufweist: eine Antriebeinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen (204, 206) als Lamellen-Kupplungsanordnungen ausgeführt sind, denen eine Betriebsflüssigkeit, insbesondere ein Kühlöl, für einen Betrieb unter Einwirkung der Betriebsflüssigkeit unter Vermittlung einer Pumpenanordnung zuführbar ist, wobei den Kupplungsanordnungen eine Steuereinrichtung (316) zugeordnet ist, die dafür ausgelegt ist, die Kupplungsanordnungen vermittels einer vorzugsweise hydraulischen Betätigungseinrichtung (234) zu betätigen,
**dadurch gekennzeichnet, dass** die Steuereinrichtung (316) dafür ausgelegt ist, zur Vorbereitung des Einlegens eines Getriebegangs bei stehender oder/und laufender Antriebseinheit vermittels der Betätigungseinrichtung (234) die Kupplungsanordnungen (204, 206) wenigstens einmal, vorzugsweise mehrmals aufeinanderfolgend im Ein- und Ausrücksinn zu betätigen, um durch mechanische Verspannung der Kupplungsanordnungen (204, 206) oder/und Verschiebung der Lamellen ein Lösen von Lamellen voneinander, die unter Vermittlung von Betriebsflüssigkeit aneinander haften, zu erreichen oder zumindest zu unterstützen.

23. Fahrzeug nach Anspruch 22, **dadurch gekennzeichnet, dass** die Steuereinrichtung (316) dafür ausgelegt ist, die Kupplungsanordnungen im Ein- und Ausrücksinn im Hinblick auf das Lösen der Lamellen voneinander bedarfsweise dann zu betätigen, wenn wenigstens eine Positiv-Bedingung erfüllt oder/und wenigstens eine Negativ-Bedingung nicht erfüllt ist.

24. Kraftfahrzeug nach einem der vorhergehenden Ansprüche, **dadurch gekennzeichnet, dass** eine/die Steuereinrichtung (316) dafür ausgelegt ist, durch entsprechende Ansteuerung der laufender Antriebseinheit (238) auf die Kupplungseinrichtung (202) wirkende Drehzahlungleichförmigkeiten, insbesondere Drehschwingungen, im Antriebstrang gezielt zu erzeugen, um ein Lösen von Lamellen voneinander, die unter Vermittlung von Betriebsflüssigkeit aneinander haften, zu erreichen oder zumindest zu unterstützen.

25. Kraftfahrzeug, umfassend einen Antriebsstrang, der aufweist eine Antriebeinheit (238), ein Getriebe (330) mit einer ersten Getriebeeingangswelle und einer zweiten Getriebeeingangswelle und eine Kupplungseinrichtung (202) mit einer ersten Kupplungsanordnung, die der ersten Getriebeeingangswelle zugeordnet ist, und einer zweiten Kupplungsanordnung, die der zweiten Getriebeeingangswelle zugeordnet ist, zur Momentenübertragung zwischen der Antriebseinheit und dem Getriebe,
wobei die Kupplungsanordnungen als Lamellen-Kupplungsanordnungen (204, 206) ausgeführt sind, denen eine Betriebsflüssigkeit, insbesondere ein Kühlöl, für einen Betrieb unter Einwirkung der Betriebsflüssigkeit unter Vermittlung einer Pumpenanordnung (209) zuführbar ist,
**dadurch gekennzeichnet,**
**dass** eine der Antriebseinheit (238) zugeordnete Steuereinrichtung (316) dafür ausgelegt ist, durch entsprechende Ansteuerung der laufender Antriebseinheit (238) auf die Kupplungseinrichtung (202) wirkende Drehzahlungleichförmigkeiten, insbesondere Drehschwingungen, im Antriebstrang gezielt zu erzeugen, um ein Lösen von Lamellen voneinander, die unter Vermittlung von Betriebsflüssigkeit aneinander haften, zu erreichen oder zumindest zu unterstützen.

26. Fahrzeug nach Anspruch 25, **dadurch gekennzeichnet, dass** die Steuereinrichtung (316) dafür ausgelegt ist, die auf die Kupplungseinrichtung wirkenden Drehzahlungleichförmigkeiten vermittels der Antriebseinheit (238) bedarfsweise dann zu erzeugen, wenn wenigstens eine Positiv-Bedingung erfüllt oder/und wenigstens eine Negativ-Bedingung nicht erfüllt ist.

27. Fahrzeug nach einem der Ansprüche 25 oder 26, **dadurch gekennzeichnet, dass** im Falle einer als Verbrennungsmotor (238) ausgeführten Antriebseinheit die Steuereinrichtung (316) dafür ausgelegt ist, die auf die Kupplungseinrichtung (202) wirkenden Drehzahlungleichförmigkeiten durch Zylinderabschaltungen oder/und nicht einheitliche oder/und wechselnde Versorgung der Zylinder mit Kraftstoff zu erzeugen.

## Claims

1. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies being designed as plate clutch assemblies (204, 206), to which an operating fluid, in particular a cooling oil, can be delivered by a pump assembly (209) for operation under the action of the operating fluid, **characterized in that** the pump assembly (209) or a flow adjusting device can be controlled by a control unit (316), in order to adjust an instantaneous operating fluid flow to the plate clutch assemblies (204, 206), and that the control unit (316) is designed to increase and to reduce the operating medium flow to at least one of the clutch assemblies as a function of an instantaneous operating medium demand, in such a way that the control unit (316) reduces or interrupts the operating medium flow in the event of a lower demand and increases the operating medium flow in the event of a higher demand, the electronic control unit, on the basis of a temperature signal emanating from a sensor registering the temperature of the cooling oil, controlling or regulating the volume delivered by the pump assembly (209) per unit time, and/or a volumetric flow allowed to pass through a volumetric flow adjustment valve arranged in the circuit.

2. Motor vehicle according to Claim 1, **characterized in that** the control unit (316) determines the demand with regard to a power loss occurring on the clutch assembly and to a lubrication demand on the plates of the clutch assembly.

3. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies being designed as plate clutch assemblies (204, 206), to which an operating fluid, in particular a cooling oil, can be delivered by a pump assembly (209) for operation under the action of the operating fluid, **characterized in that** the pump assembly (209) or the flow adjusting device and/or a pump assembly (208) assigned to a hydraulic operating device (234) for the clutch assemblies can be operated in a circulation mode, in which heat energy is introduced into the operating medium by circulation of operating fluid irrespective of a demand for the delivery of operating medium to the clutch assemblies and independently of the operation of the clutch arrangement, it being possible to open a bypass (230, 232), so as to be able to circulate the operating medium bypassing the clutch assemblies, and a control unit (316) being designed to respond to an event indicative of an imminent starting of the motor vehicle and to initiate the circulation mode in response to the event indicated.

4. Motor vehicle according to Claim 3, **characterized in that** the control unit (316) initiates the circulation mode when the driver opens the vehicle by remote control and/or the vehicle door is opened.

5. Motor vehicle according to either of Claims 3 or 4, **characterized in that** a/the control unit (316) is designed to automatically initiate the circulation mode if at least one positive condition is fulfilled and/or at least one negative condition is not fulfilled.

6. Motor vehicle according to any one of Claims 3 to 5, **characterized in that** a/the control unit (316) is designed to automatically terminate the circulation mode if at least one positive condition is fulfilled and/or at least one negative condition is not fulfilled.

7. Motor vehicle according to any one of the preceding Claims, **characterized in that** a/the control unit (316) is designed to enable and to block starting of the power unit as a function of an instantaneous viscosity state of the operating medium.

8. Motor vehicle according to any one of the preceding Claims, **characterized in that** a/the control unit (316) is designed to operate the clutch assemblies (204, 206) by means of a preferably hydraulic operating device (234) and to operate at least one, preferably both, clutch assemblies with slip in a warm-up mode.

9. Motor vehicle according to Claim 8, **characterized in that** the control unit (316) is designed to operate at least one clutch assembly with slip in opposition to a braking action of a brake arrangement (454) whilst the vehicle is stationary and/or to operate at least one clutch assembly with slip whilst the vehicle is in motion.

10. Motor vehicle according to any one of the preceding Claims, **characterized in that** a pump assembly (209) or flow adjusting device can be controlled by a/the control unit (316), in order to adjust an instantaneous operating fluid flow to the plate clutch assemblies, and that the control unit (316) is designed, in preparation for shutting off the motor vehicle or when shutting off the motor vehicle with the clutch assemblies (204, 206) disengaged, to set the operating fluid to an increased flow for a predefined period of time, in order to force the plates of the clutch assemblies apart by means of the operating fluid flow.

11. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies being designed as plate clutch assemblies (204, 206), to which an operating fluid, in particular a cooling oil, can be delivered by a pump assembly (209) for operation under the action of the operating fluid, **characterized in that** the pump assembly (209) or flow adjusting device can be controlled by a control unit (316), in order to adjust an instantaneous operating fluid flow to the plate clutch assemblies (204, 206), and that the control unit (316) is designed to detect an imminent shut-off of the motor vehicle or shutting off of the motor vehicle and in preparation for shutting off the motor vehicle or when shutting off the motor vehicle with the clutch assemblies (204, 206) disengaged, to set the operating fluid to an increased flow for a predefined period of time, in order to force the plates of the clutch assemblies apart by means of the operating fluid flow.

12. Vehicle according to Claim 11, **characterized in that** the control unit (316) is designed to set the increased operating fluid flow as necessary if at least one positive condition is fulfilled and/or at least one negative condition is not fulfilled.

13. Vehicle according to any one of the preceding Claims, **characterized in that** a/the control unit (316) is designed, in preparation for shutting off the motor vehicle and/or when shutting off the motor vehicle, to operate the power unit (238) at a speed significantly higher than an idling speed for a predefined period of time with the clutch assemblies (204, 206) disengaged, in order to remove operating fluid from the plates of the clutch assemblies under the effect of centrifugal force.

14. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies being designed as plate clutch assemblies (204, 206), to which an operating fluid, in particular a cooling oil, can be delivered by a pump assembly (209) for operation under the action of the operating fluid, **characterized in that** a control unit (316) assigned to the power unit (238) is designed to detect an imminent shut-off of the motor vehicle or shutting off of the motor vehicle and in preparation for shutting off and/or when shutting off the motor vehicle to operate the power unit (238) at a speed significantly higher than an idling speed for a predefined period of time with the clutch assemblies (204, 206) disengaged, in order to remove operating fluid from the plates of the clutch assemblies under the effect of centrifugal force.

15. Motor vehicle according to Claim 14, **characterized in that** the control unit (316) is designed first to interrupt the supply of operating fluid to the clutch assemblies (204, 206) and then to operate the power unit (238) at speed significantly higher than the idling speed for the predetermined period of time.

16. Vehicle according to either of Claims 14 or 15, **characterized in that** the control unit (316) is designed to operate the power unit at the speed significantly higher than the idling speed as necessary if at least one positive condition is fulfilled and/or at least one negative condition is not fulfilled.

17. Vehicle according to any one of the preceding Claims, **characterized in that** the control unit (316) is designed, in preparation for the engagement of at least one transmission gear and/or when engaging at least one transmission gear, to operate the power unit (238) at a speed significantly higher than an idling speed for a predefined period of time with at least one clutch assembly disengaged and/or with no more than one transmission gear engaged, in order to remove operating fluid from the plates of the clutch assemblies under the effect of centrifugal force.

18. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies being designed as plate clutch assemblies (204, 206), to which an operating fluid, in particular a cooling oil, can be delivered by a pump assembly (209) for operation under the action of the operating fluid, **characterized in that** a control unit (316) assigned to the power unit (238) is designed to detect an imminent engagement of at least one transmission gear or an engagement of at least one transmission gear and in preparation for the engagement and/or an engagement to operate the power unit (238) at a speed significantly higher than an idling speed for a predefined period of time with clutch assemblies disengaged, in order to remove operating fluid from the plates of the clutch assemblies under the effect of centrifugal force.

19. Motor vehicle according to Claim 18, **characterized in that** the control unit (316) is designed first to interrupt the supply of operating fluid to the clutch assemblies and then to operate the power unit at the speed significantly higher than the idling speed for the predefined period of time.

20. Vehicle according to either of Claims 18 or 19, **characterized in that** the control unit (316) is designed to operate the power unit (238) at the speed significantly higher than the idling speed as necessary if at least one positive condition is fulfilled and/or at least one negative condition is not fulfilled.

21. Vehicle according to any one of the preceding Claims, **characterized in that** the control unit (316) is designed, in preparation for the engagement of a transmission gear with the power unit at a standstill and/or running, to operate the clutch assemblies (204, 206) by means of a preferably hydraulic operating device (234) at least once, preferably several times in succession, in the engagement and disengagement direction in order, through mechanical tensioning of the clutch assemblies (204, 206) and/or displacement of the plates, to separate or at least to assist the separation of plates which adhere to one another under the supply of operating fluid.

22. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies (204, 206) being designed as plate clutch assemblies, to which an operating fluid, in particular a cooling oil, can be delivered by a pump assembly for operation under the action of the operating fluid, a control unit (316), which is designed to operate the clutch assemblies by means of a preferably hydraulic operating device (234), being assigned to the clutch assemblies, **characterized in that** the control unit (316) is designed, in preparation for the engagement of a transmission gear with the power unit at a standstill and/or running, to operate the clutch assemblies (204, 206) by means of the operating device (234) at least once, preferably several times in succession, in the engagement and disengagement direction in order, through mechanical tensioning of the clutch assemblies (204, 206) and/or displacement of the plates, to separate or at least to assist the separation of plates which adhere to one another under the supply of operating fluid.

23. Vehicle according to Claim 22, **characterized in that** the control unit (316) is designed to operate the clutch assemblies as necessary in the engagement and disengagement direction for the purpose of separating the plates from one another, if at least one positive condition is fulfilled and/or at least one negative condition is not fulfilled.

24. Motor vehicle according to any one of the preceding Claims, **characterized in that** a/the control unit (316) is designed through corresponding control of the running power unit (238), purposely to generate engine speed irregularities, especially torsional vibrations, in the drive train, which act upon the clutch arrangement (202) in order to separate or at least to assist the separation of plates which adhere to one another under the supply of operating fluid.

25. Motor vehicle, comprising a drivetrain, which has: a power unit (238), a transmission (330) with a first transmission input shaft and a second transmission input shaft and a clutch arrangement (202) with a first clutch assembly, which is assigned to the first transmission input shaft, and a second clutch assembly, which is assigned to the second transmission input shaft, for transmitting torque between the power unit and the transmission, the clutch assemblies being designed as plate clutch assemblies (204, 206), to which an operating fluid, in particular a cooling oil, can be delivered by a pump assembly (209) for operation under the action of the operating fluid, **characterized in that** a control unit (316) assigned to the power unit (238) is designed, through corresponding control of the running power unit (238), purposely to generate engine speed irregularities, especially torsional vibrations, in the drive train, which act upon the clutch arrangement (202) in order to separate or at least to assist the separation of plates which adhere to one another under the supply of operating fluid.

26. Vehicle according to Claim 25, **characterized in that** the control unit (316) is designed by means of the power unit (238) to generate engine speed irregularities acting upon the clutch arrangement as necessary, if at least one positive condition is fulfilled and/or at least one negative condition is not fulfilled.

27. Vehicle according to either of Claims 25 or 26, **characterized in that** in the case of a power unit embodied as an internal combustion engine (238) the control unit (316) is designed to generate the engine speed irregularities acting upon the clutch arrangement (202) through cylinder cut-offs and/or non-uniform and/or alternating supply of fuel to the cylinders.

## Revendications

1. Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service par l'intermédiaire d'un ensemble de pompe (209),
**caractérisé en ce que** l'ensemble de pompe (209) ou un dispositif de réglage de débit peut être asservi par un dispositif de commande (316) pour régler un débit momentané de liquide de service vers les ensembles d'embrayage multidisques (204, 206), et **en ce que** le dispositif de commande (316) est conçu pour, en fonction d'un besoin momentané d'apport de fluide de service à au moins un des ensembles d'embrayage, augmenter ou diminuer le débit de liquide de service de telle sorte que le dispositif de commande (316) diminue ou interrompt le débit de liquide de service en cas de besoin d'apport inférieur et augmente le débit de liquide de service en cas de besoin d'apport supérieur, sachant que l'unité de commande électronique, sur la base d'un signal de température qui provient d'un capteur enregistrant la température du liquide de refroidissement, commande ou régule le volume débité par unité de temps par l'ensemble de pompe (209) et/ou un débit volumique que laisse passer une soupape de réglage de débit volumique disposée dans le circuit.

2. Véhicule selon la revendication 1, **caractérisé en ce que** le dispositif de commande (316) détermine le besoin d'apport en considération d'une dissipation de puissance apparaissant au niveau de l'ensemble d'embrayage et d'un besoin de lubrification au niveau des disques de l'ensemble d'embrayage.

3. Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service par l'intermédiaire d'un ensemble de pompe (209),
**caractérisé en ce que** l'ensemble de pompe (209) ou le dispositif de réglage de débit et/ou un ensemble de pompe (208) associé à un dispositif d'actionnement hydraulique (234) pour les ensembles d'embrayage peuvent être exploités en un mode de circulation dans lequel, en faisant circuler le liquide de service indépendamment d'un besoin d'apport de fluide de service aux ensembles d'embrayage ou encore indépendamment de l'actionnement du dispositif d'embrayage, de l'énergie calorifique est chargée dans le fluide de service, sachant qu'une dérivation peut être libérée (230, 232) afin de pouvoir faire circuler le fluide de service le long des ensembles d'embrayage, et sachant que le dispositif de commande (316) est conçu pour réagir à un évènement indiquant un démarrage imminent du véhicule et pour déclencher le fonctionnement en circulation en réaction à l'évènement indiqué.

4. Véhicule selon la revendication 3, **caractérisé en ce que** le dispositif de commande (316) déclenche le fonctionnement en circulation si le conducteur ouvre le véhicule par commande à distance et/ou si la porte du véhicule est ouverte.

5. Véhicule selon la revendication 3 ou 4, **caractérisé en ce qu'**un/le dispositif de commande (316) est conçu pour déclencher automatiquement le fonctionnement en circulation si au moins une condition positive est remplie et/ou si au moins une condition négative n'est pas remplie.

6. Véhicule selon l'une quelconque des revendications 3 à 5, **caractérisé en qu'**un/le dispositif de commande (316) est conçu pour mettre automatiquement un terme au fonctionnement en circulation si au moins une condition positive est remplie et/ou si au moins une condition négative n'est pas remplie.

7. Véhicule selon l'une quelconque des revendications précédentes, **caractérisé en ce qu'**un/le dispositif de commande (316) est conçu pour libérer ou bloquer un démarrage de l'unité d'entraînement en fonction d'un état momentané de viscosité du fluide de service.

8. Véhicule selon l'une quelconque des revendications précédentes, **caractérisé en ce qu'**un/le dispositif de commande (316) est conçu pour actionner les ensembles d'embrayage (204, 206) au moyen d'un dispositif d'actionnement (234) de préférence hydraulique et pour, dans un mode de mise en température, exploiter en patinage au moins un des ensembles d'embrayage, de préférence les deux.

9. Véhicule selon la revendication 8, **caractérisé en ce que** le dispositif de commande (316) est conçu pour, si le véhicule est immobilisé, laisser fonctionner l'ensemble d'embrayage au moins unique en patinage à l'encontre d'une action de freinage d'un dispositif de freinage (454), et/ou pour, si le véhicule roule, faire fonctionner en patinage l'ensemble d'embrayage au moins unique.

10. Véhicule selon l'une quelconque des revendications précédentes, **caractérisé en ce qu'**un ensemble de pompe (209) ou un dispositif de réglage de débit peut être asservi par un/le dispositif de commande (316) pour régler un débit momentané de liquide de service vers les ensembles d'embrayage multidisques, et **en ce que** le dispositif de commande (316) est conçu pour, afin de préparer l'arrêt du véhicule ou lors de l'arrêt du véhicule, les ensembles d'embrayage (204, 206) étant débrayés, régler pendant un intervalle de temps prédéfini un débit excessif de liquide de service afin d'écarter les uns des autres les disques des ensembles d'embrayage au moyen du flux de liquide de service.

11. Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service par l'intermédiaire d'un ensemble de pompe (209),
**caractérisé en ce que** l'ensemble de pompe (209) ou un dispositif de réglage de débit peut être asservi par un dispositif de commande (316) pour régler un débit momentané de liquide de service vers les ensembles d'embrayage multidisques (204, 206), et **en ce que** le dispositif de commande (316) est conçu pour déceler un arrêt imminent du véhicule ou un arrêt du véhicule et pour, en préparation à l'arrêt ou lors de l'arrêt, les ensembles d'embrayage étant débrayés, régler pendant un intervalle de temps prédéfini un débit excessif de liquide de service afin d'écarter les uns des autres les disques des ensembles d'embrayage au moyen du flux de liquide de service.

12. Véhicule selon la revendication 11, **caractérisé en ce que** le dispositif de commande (316) est conçu pour régler en cas de besoin le débit excessif de liquide de service si au moins une condition positive est remplie et/ou si au moins une condition négative n'est pas remplie.

13. Véhicule selon l'une quelconque des revendications précédentes, **caractérisé en ce qu'**un/le dispositif de commande (316) est conçu pour, afin de préparer l'arrêt du véhicule et/ou lors de l'arrêt du véhicule, les ensembles d'embrayage (204, 206) étant débrayés, exploiter pendant un intervalle de temps prédéfini l'unité d'entraînement (238) à un régime nettement accru par rapport à un régime de ralenti afin d'enlever le liquide de service des disques des ensembles d'embrayage par l'action de la force centrifuge.

14. Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service par l'intermédiaire d'un ensemble de pompe (209),
**caractérisé en ce qu'**un dispositif de commande (316) associé à l'unité d'entraînement (238) est conçu pour déceler un arrêt imminent du véhicule ou un arrêt du véhicule et pour, en préparation à l'arrêt ou lors de l'arrêt, les ensembles d'embrayage (204, 206) étant débrayés, exploiter pendant un intervalle de temps prédéfini l'unité d'entraînement (238) à un régime nettement accru par rapport à un régime de ralenti afin d'enlever le liquide de service des disques des ensembles d'embrayage par l'action de la force centrifuge.

15. Véhicule selon la revendication 14, **caractérisé en ce que** le dispositif de commande (316) est conçu pour interrompre d'abord l'apport de liquide de service aux ensembles d'embrayage (204, 206), puis pour exploiter pendant l'intervalle de temps prédéfini l'unité d'entraînement (238) au régime nettement accru par rapport au régime de ralenti.

16. Véhicule selon la revendication 14 ou 15, **caractérisé en ce que** le dispositif de commande (316) est conçu pour exploiter en cas de besoin l'unité d'entraînement au régime nettement accru par rapport au régime de ralenti si au moins une condition positive est remplie et/ou si au moins une condition négative n'est pas remplie.

17. Véhicule selon l'une quelconque des revendications précédentes, **caractérisé en ce qu'**un/le dispositif de commande (316) est conçu pour, en préparation à l'engagement d'au moins un rapport de boîte et/ou lors de l'engagement du rapport de boîte au moins unique, au moins un ensemble d'embrayage étant débrayé et/ou au plus un rapport de boîte étant engagé, exploiter pendant un intervalle de temps prédéfini l'unité d'entraînement (238) à un régime nettement accru par rapport à un régime de ralenti afin d'enlever le liquide de service des disques des ensembles d'embrayage par l'action de la force centrifuge.

18. Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service par l'intermédiaire d'un ensemble de pompe (209),
**caractérisé en ce qu'**un dispositif de commande (316) associé à l'unité d'entraînement (238) est conçu pour déceler un engagement imminent du rapport de boîte au moins unique ou un engagement du rapport de boîte au moins unique et pour, en préparation à l'engagement et/ou lors de l'engagement, les ensembles d'embrayage étant débrayés, exploiter pendant un intervalle de temps prédéfini l'unité d'entraînement (238) à un régime nettement accru par rapport à un régime de ralenti afin d'enlever le liquide de service des disques des ensembles d'embrayage par l'action de la force centrifuge.

19. Véhicule selon la revendication 18, **caractérisé en ce que** le dispositif de commande (316) est conçu pour interrompre d'abord l'apport de liquide de service aux ensembles d'embrayage, puis pour exploiter pendant l'intervalle de temps prédéfini l'unité d'entraînement au régime nettement accru par rapport au régime de ralenti.

20. Véhicule selon la revendication 18 ou 19, **caractérisé en ce que** le dispositif de commande (316) est conçu pour exploiter en cas de besoin l'unité d'entraînement (238) au régime nettement accru par rapport au régime de ralenti si au moins une condition positive est remplie et/ou si au moins une condition négative n'est pas remplie.

21. Véhicule selon l'une quelconque des revendications précédentes, **caractérisé en ce qu'**un/le dispositif de commande (316) est conçu pour, en préparation à l'engagement d'un rapport de boîte, l'unité d'entraînement étant à l'arrêt et/ou en marche, actionner les ensembles d'embrayage (204, 206) au moyen d'un dispositif d'actionnement (234) de préférence hydraulique au moins une fois et de préférence plusieurs fois successivement dans le sens d'embrayage et dans le sens de débrayage, afin d'obtenir ou du moins de favoriser, par une distorsion mécanique des ensembles d'embrayage (204, 206) et/ou par un déplacement des disques, un décollement des disques qui adhérent entre eux au moyen du liquide de service.

22. Véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage (204, 206) sont réalisés sous la forme d'ensembles d'embrayage multidisques auxquels peut être apporté un liquide de service, notamment un liquide de refroidissement, pour un fonctionnement sous l'action du liquide de service par l'intermédiaire d'un ensemble de pompe,
sachant qu'un dispositif de commande (316) est associé aux ensembles d'embrayage, qui est conçu pour actionner les ensembles d'embrayage au moyen d'un dispositif d'actionnement (234) de préférence hydraulique,
**caractérisé en ce que** le dispositif de commande (316) est conçu pour, en préparation à l'engagement d'un rapport de boîte, l'unité d'entraînement étant à l'arrêt et/ou en marche, actionner les ensembles d'embrayage (204, 206) au moyen du dispositif d'actionnement (234) au moins une fois et de préférence plusieurs fois successivement dans le sens d'embrayage et dans le sens de débrayage, afin d'obtenir ou du moins de favoriser, par une distorsion mécanique des ensembles d'embrayage (204, 206) et/ou par un déplacement des disques, un décollement des disques qui adhérent entre eux au moyen du liquide de service.

23. Véhicule selon la revendication 22, **caractérisé en ce que** le dispositif de commande (316) est conçu pour actionner en cas de besoin les ensembles d'embrayage dans le sens d'embrayage et dans le sens de débrayage, afin de décoller les disques les uns des autres, si au moins une condition positive est remplie et/ou si au moins une condition négative n'est pas remplie.

24. Véhicule selon l'une quelconque des revendications précédentes, **caractérisé en ce qu'**un/le dispositif de commande (316) est conçu pour, par un asservissement correspondant de l'unité d'entraînement en marche (238), produire de manière ciblée dans la chaîne cinématique des irrégularités de régime agissant sur le dispositif d'embrayage (202), notamment des vibrations de torsion, afin d'obtenir ou du moins de favoriser un décollement des disques qui adhérent entre eux au moyen du liquide de service.

25. véhicule comprenant une chaîne cinématique qui présente : une unité d'entraînement (238), une boîte de vitesses (330) avec un premier arbre d'entrée de boîte et un deuxième arbre d'entrée de boîte, et un dispositif d'embrayage (202) avec un premier ensemble d'embrayage qui est associé au premier arbre d'entrée de boîte et un deuxième ensemble d'embrayage qui est associé au deuxième arbre d'entrée de boîte, pour la transmission de couple entre l'unité d'entraînement et la boîte de vitesses,
sachant que les ensembles d'embrayage sont réalisés sous la forme d'ensembles d'embrayage multidisques (204, 206) auxquels peut être apporté un liquide de service, notamment un liquide de refroidissement, pour un fonctionnement sous l'action du liquide de service par l'intermédiaire d'un ensemble de pompe (209),
**caractérisé en ce qu'**un dispositif de commande (316) associé à l'unité d'entraînement (238) est conçu pour, par un asservissement correspondant de l'unité d'entraînement en marche (238), produire de manière ciblée dans la chaîne cinématique des irrégularités de régime agissant sur le dispositif d'embrayage (202), notamment des vibrations de torsion, afin d'obtenir ou du moins de favoriser un décollement des disques qui adhérent entre eux au moyen du liquide de service.

26. Véhicule selon la revendication 25, **caractérisé en ce que** le dispositif de commande (316) est conçu pour produire en cas de besoin au moyen de l'unité d'entraînement (238) les irrégularités de régime agissant sur le dispositif d'embrayage si au moins une condition positive est remplie et/ou si au moins une condition négative n'est pas remplie.

27. Véhicule selon la revendication 25 ou 26, **caractérisé en ce que**, dans le cas d'une unité d'entraînement réalisée sous forme de moteur thermique (238), le dispositif de commande (316) est conçu pour produire les irrégularités de régime agissant sur le dispositif d'embrayage (202) par des désactivations de cylindres et/ou par une alimentation non uniforme et/ou alternante des cylindres en carburant.
